# FASCICULE DE BREVET EUROPEEN

(11) **EP 0 318 406 B1**
(45) Date de publication et mention de la délivrance du brevet: **06.04.1994**
(21) Numéro de dépôt: 88430030.2
(22) Date de dépôt: 22.11.1988
(51) Int. Cl.: A01G 17/08

(54) **Machine de palissage pour la vigne ou autres plantes ou arbrisseaux, et agrafe utilisée par cette machine**
Anpfählmaschine für Wein oder andere Pflanzen oder Bäumchen und Spange wie sie von dieser Maschine benutzt wird
Espalier machine for vine or other plants or saplings and clasp being used by that machine

(30) Priorité: 23.11.1987 FR 8716384; 23.11.1987 FR 8716385
(43) Date de publication de la demande: 31.05.1989
(73) Titulaire: ETABLISSEMENTS PELLENC ET MOTTE (Société Anonyme), 84120 Pertuis (FR)
(72) Inventeur: Pellenc, Roger, F-84120 Pertuis (FR)
(74) Mandataire: Marek, Pierre, Cabinet Marek

(56) Documents cités:
- CH-A- 624 549
- DE-A- 2 512 342
- FR-A- 2 569 525

## Description

La présente invention concerne une machine de palissage pour la vigne ou autres plantes ou arbrisseaux tels que groseillers, framboisiers, etc., plantés en rangs parallèles, au moyen de fils releveurs et d'agrafes. Elle vise également une agrafe spécialement conçue pour la mise en oeuvre de cette machine.

Dans la culture de la vigne, il est courant de relever les sarments ou les pousses tombantes et de les maintenir en position redressée, au moyen de deux fils de palissage disposés de part et d'autre des alignements de ceps et liés de place en place, au moyen d'agrafes. De la sorte, les fruits se trouvent mieux exposés au soleil, ce qui favorise leur maturité tout en contrariant le développement des maladies des végétaux, surtout cryptogamiques. D'autre part, ce palissage favorise l'accès de la vigne aux machines de culture, de récolte et de traitements lesquels peuvent être opérés avec une meilleure efficacité.

Selon une méthode de palissage mise en oeuvre dans certains vignobles, deux fils métalliques dit "fils releveurs" sont disposés de part et d'autre de chaque rang de pieds de vigne et fixés, par leurs extrémités, aux piquets placés aux extrémités du rang. En hiver, ces fils releveurs sont détendus et reposent au sol, ou retombent jusqu'à proximité du sol. Vers la fin du printemps ou au début de l'été, lorsque la croissance de la nouvelle végétation est suffisamment avancée, les fils releveurs sont d'abord relevés et tendus, de façon à redresser les branches et rameaux courbés en direction du sol, puis assemblés au moyen d'un lien, de part et d'autre de chaque plante dont la végétation relevée se trouve ainsi renfermée et maintenue dans une sorte de ceinture. Cette méthode offre l'avantage d'une plus grande efficacité par rapport à d'autres méthodes de palissage. Toutefois, les opérations de relèvement, d'accrochage ou de liaison, et de tension des fils releveurs, sont encore actuellement exécutées manuellement, ce qui représente des interventions toujours longues et pénibles, nécessitant plusieurs exécutants.

On connait par le document FR-A-2.569.525 une machine à palisser la vigne comportant les caractéristiques du préambule de la revendication 1, comportant un bâti susceptible d'être porté par un attelage trois points d'un tracteur et muni d'une potence latérale à laquelle sont suspendus de part et d'autre du rang de vigne à palisser, deux cônes de guidage et protection inclinés vers l'avant dans le sens de déplacement du tracteur et en direction des fils de palissage gisant sur le sol, lesdits cônes étant articulés autour d'un axe horizontal transversal au rang de vigne et munis à leur extrémité avant inférieure et à leur extrémité arrière supérieure d'un organe de guidage sur lesquels passent les fils à palisser en sorte d'amener ces derniers après passage à l'intérieur des cônes, à l'arrière de ceux-ci, à la hauteur des crochets équipant les piquets de palissage, sur lesquels sont fixés lesdits fils, au fur et à mesure de la progression de la machine.

Une telle machine ne permet pas un palissage entièrement automatique de la vigne au moyen de deux fils releveurs, puisque l'on doit :
- au départ du rang : engager manuellement les fils releveurs dans les cônes de guidage et les positionner manuellement sur les galets de ces derniers, puis accrocher manuellement lesdits fils relevés manuellement, sur les crochets du premier piquet du rang ;
- en cours de progression le long du rang : accrocher manuellement les fils relevés sur les crochets des différents piquets du palissage ;
- à la fin du rang : désengager les fils releveurs 6 des cônes de guidage.

Il est donc indispensable d'utiliser deux opérateurs dont l'un conduit le tracteur et l'autre accroche les fils sur les cônes de guidage et sur les piquets du palissage. En outre, une telle machine ne peut fonctionner que si le palissage comporte des piquets particuliers alignés en nombre relativement important.

On connait également (DE-A-2.512.342) une machine pour palisser la vigne, apte à être portée par un engin assurant son déplacement parallèlement à un alignement de ceps de vigne à palisser, comportant un bâti de forme générale en U renversé dont les montants latéraux s'étendent verticalement et symétriquement de chaque côté de l'alignement, deux organes de relevage progressif des sarments, articulés à l'avant des montants, deux bobines portées par ces montants et dévidant respectivement deux fils parallèlement à l'alignement à palisser au fur et à mesure du déplacement de la machine, et des moyens pour réaliser l'agrafage transversal périodique des deux fils à travers les sarments.

Une telle machine qui met en oeuvre une méthode de palissage différente de celle dite "des fils releveurs", a notamment pour inconvénients de nécessiter l'utilisation annuelle d'importantes longueurs de ficelles non récupérables, ce qui est très coûteux. En outre, les ficelles qui sont coupées avant la récolte restent attachées au palissage ou aux arbustes et ont tendance à s'enrouler autour des organes rotatifs des machines de préparation à la récolte ou de récolte comportant des outils tournant et à perturber le fonctionnement de ces derniers.

La présente invention a notamment pour but de remédier aux inconvénients et insuffisances des machines décrites dans les documents susmentionnés.

Selon l'invention, cet objectif est atteint grâce à la machine de palissage décrite dans la revendication principale du présent Brevet.

Cette machine permet de réaliser de façon entièrement mécanique et avec un seul opérateur, le relevage et les différentes liaisons des fils releveurs. Le relevage et les assemblages des fils releveurs peuvent ainsi s'opérer rapidement, sans fatigue excessive et de façon beaucoup plus économique.

En outre, la machine selon l'invention permet l'utilisation d'agrafes réalisées en matière plastique ne présentant aucun risque d'altération des produits de la récolte et qui n'ont aucun effet nuisible sur la fonction des organes ou des outils des machines de récolte ou de taille.

L'agrafe selon l'invention est exécutée en matière plastique dotée d'une capacité de déformation élastique et comporte un corps rectiligne présentant deux faces planes opposées et des surfaces externe et interne parallèles, les extrémités de ce corps étant recourbées, de manière à constituer deux crochets opposés dont les ouvertures se font face et comprenant, **chacun, une branche espacée** dudit corps et s'étendant parallèlement à ce dernier, en direction du centre ou plan médian de l'agrafe, cette dernière étant encore remarquable par le fait que ses extrémités en forme de crochets sont symétriques et conformées de manière identique, et par le fait qu'un obstacle franchissable par déformation élastique d'au moins une partie de ladite agrafe est placé à l'entrée du logement ménagé à l'intérieur de chaque crochet.

Les buts, caractéristiques et avantages ci-dessus, et d'autres encore, ressortiront mieux de la description qui suit et des dessins annexés dans lesquels :
La figure 1 est une vue latérale, à caractère schématique, de la machine de palissage selon l'invention représentée installée à l'avant d'un tracteur agricole classique.
La figure 2 est une vue de face de cette machine.

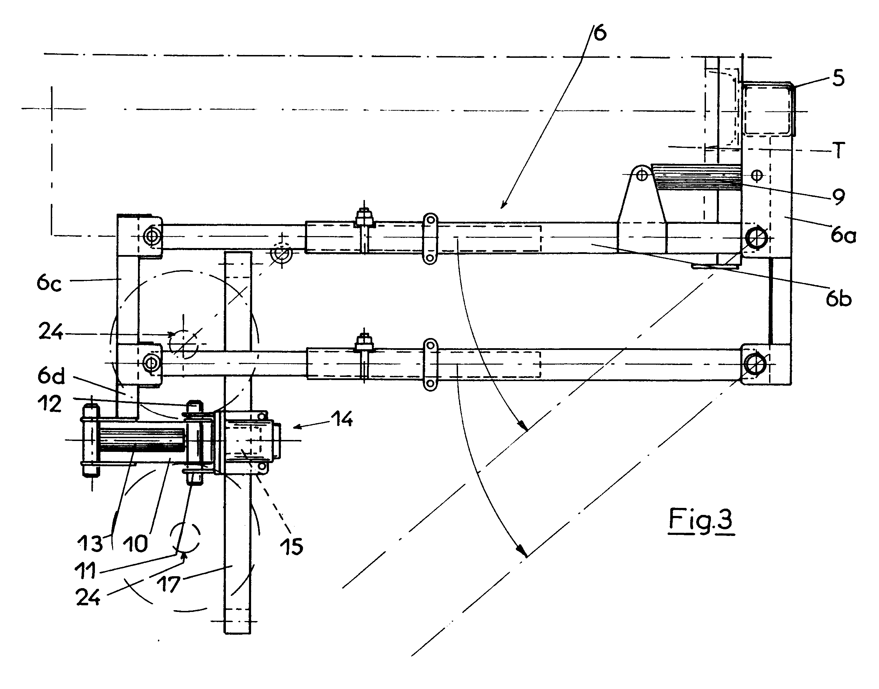

La figure 3 est une vue de dessus du châssis portant la tête de palissage.

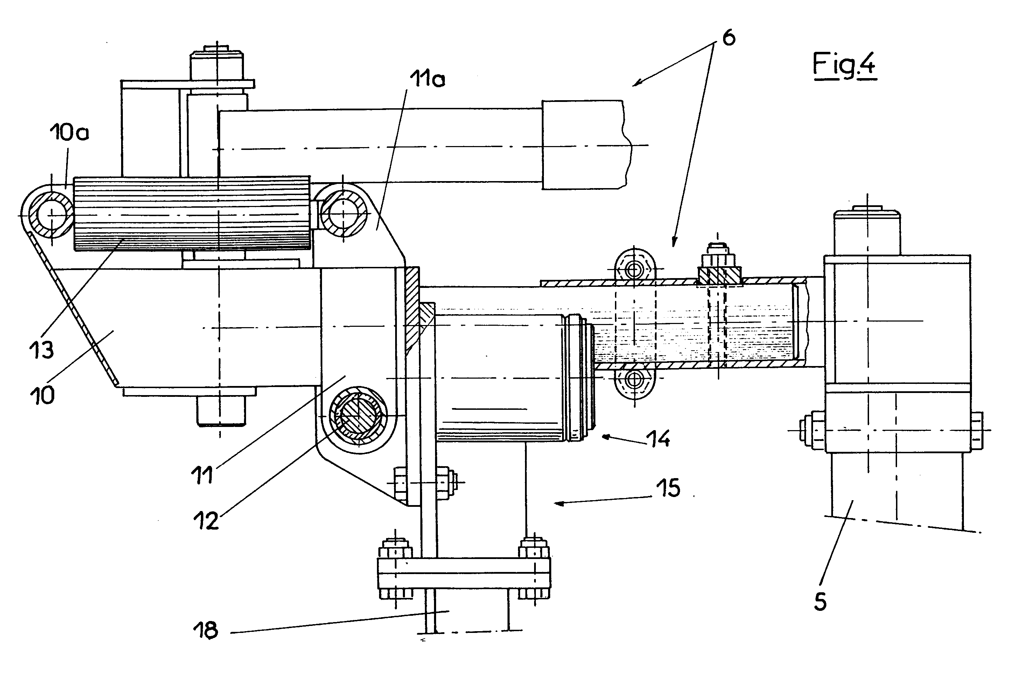

La figure 4 est une vue de côté et de détail, avec coupe partielle, montrant les moyens de suspension pendulaire de la tête de palissage de la machine.

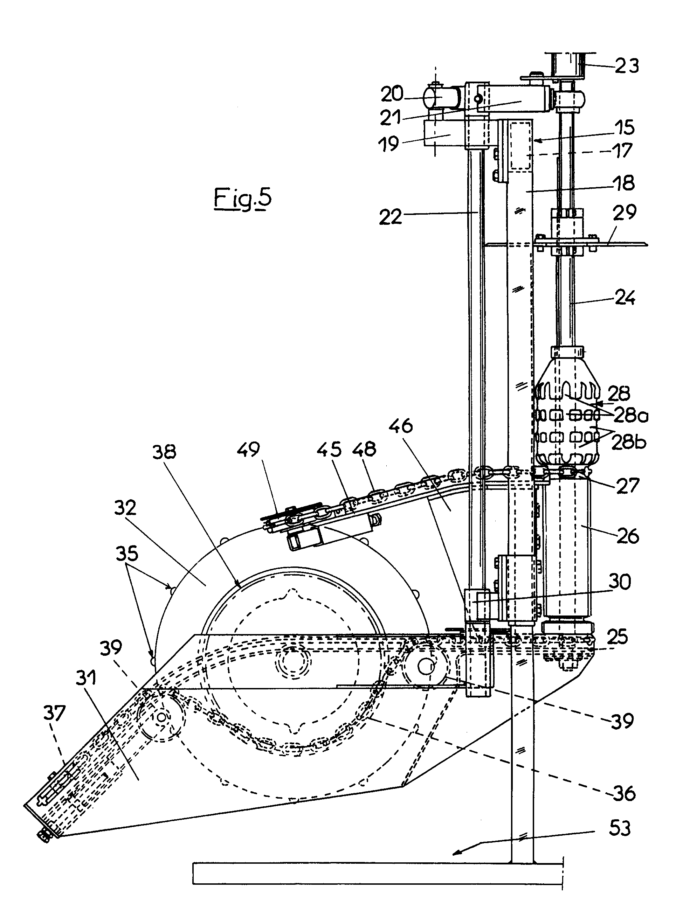

La figure 5 est une vue de côté illustrant plus spécialement les dispositifs de relevage et de guidage des fils releveurs et les moyens de canalisation de la végétation équipant la tête de palissage.

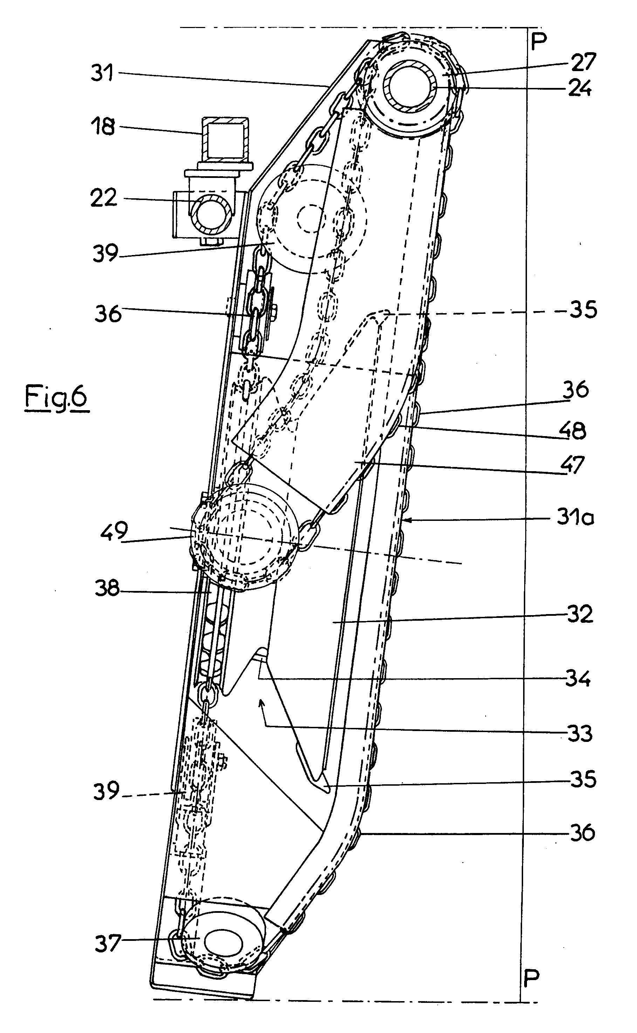

La figure 6 est une vue de dessus de l'un des ensembles releveurs.
La figure 7 est une vue en coupe diamétrale du diabolo rotatif équipant chaque releveur, et du carter-déflecteur muni de ce diabolo.

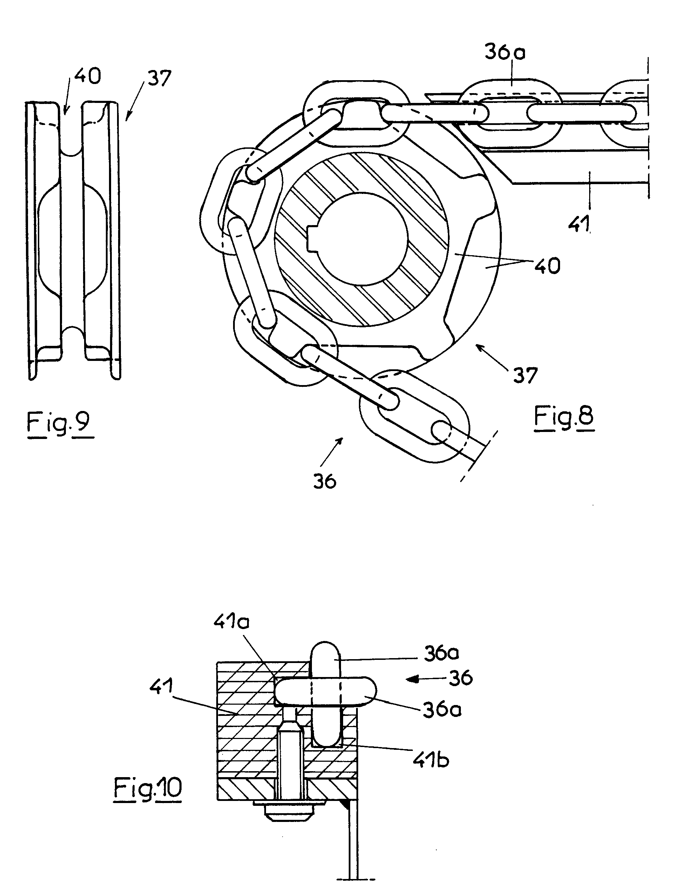

La figure 8 est une vue de face et de détail, avec coupe partielle, illustrant la conformation de la chaîne et des noix à empreintes équipant les releveurs inférieurs et supérieurs.
La figure 9 est une vue en coupe diamétrale d'une noix à empreintes.
La figure 10 est une vue en coupe transversale du chemin de guidage de la chaîne calibrée ou chaîne à maillons perpendiculaires, ménagé le long du bord supérieur des dispositifs inférieurs et supérieurs de canalisation de la végétation.

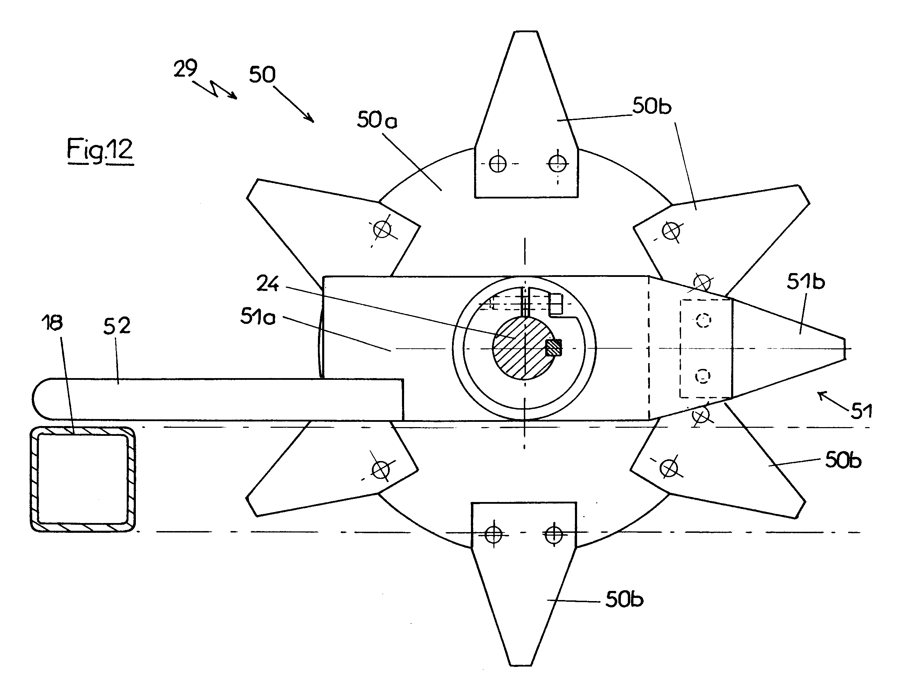

La figure 11 est une vue en élévation et en demi-coupe axiale, montrant notamment le cylindre de guidage de l'un des fils releveurs équipant chaque ensemble de relevage et de guidage.
La figure 12 est une vue en plan d'un organe de de coupe et de canalisation de la végétation, monté à la partie supérieure de l'arbre de transmission assurant l'entraînement de chaque ensemble de relevage et de guidage.
La figure 13 est une vue de dessus de l'un des patins de détection et de commande de centrage de la tête de palissage, équipant la partie inférieure d'au moins l'un des montants du châssis portant ladite tête de palissage.
La figure 14 est une vue arrière, à caractère schématique, du système d'agrafe de la machine.
La figure 15 est une vue de côté, avec coupes partielles, de l'agrafeuse proprement dite du système d'agrafage.
La figure 16 est une vue de face, avec coupes partielles, de cette agrafeuse.

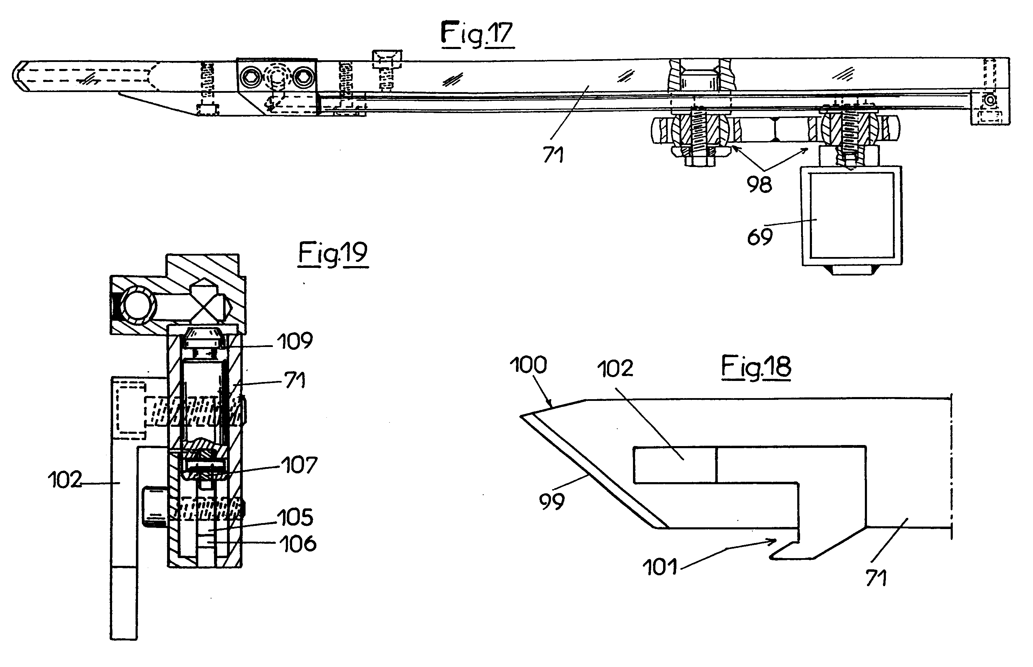

La figure 17 est une vue en plan montrant notamment le montage de la flèche mobile d'agrafage sur son bras porteur, au moyen d'un système d'articulation à deux rotules.
La figure 18 est une vue de détail et de face de l'extrémité avant de cette flèche.
La figure 19 est une vue en coupe transversale de la flèche et du dispositif de pose d'agrafe.
La figure 20 est une vue de face de l'agrafe selon l'invention.
Les figures 21 et 22 sont des vues de face illustrant le mode de mise en place de cette agrafe sur deux fils, de façon à obtenir une liaison entre ces derniers.
La figure 23 est une vue en plan illustrant les moyens permettant de modifier l'orientation des deux ensembles de relevage et de guidage des fils et de canalisation de la végétation relevée.
La figure 24 est une vue de côté illustrant le montage basculant du châssis portant le système d'agrafage.

On se reporte auxdits dessins pour décrire, en premier lieu, un exemple de réalisation intéressant, mais non limitatif, de la machine de palissage selon l'invention qui, suivant cet exemple, est exécutée sous forme d'une machine portée, agencée de manière à pouvoir être installée sur un tracteur agricole classique.

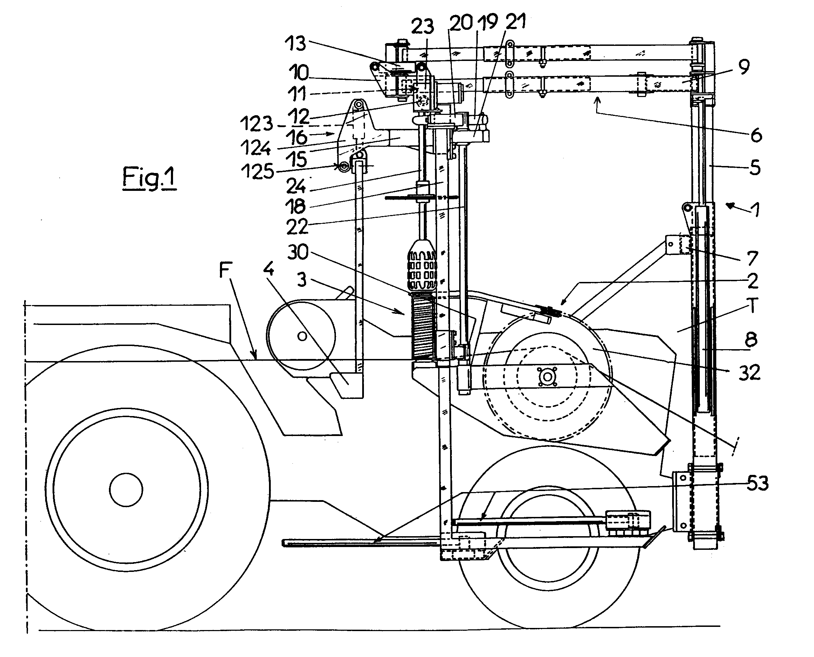

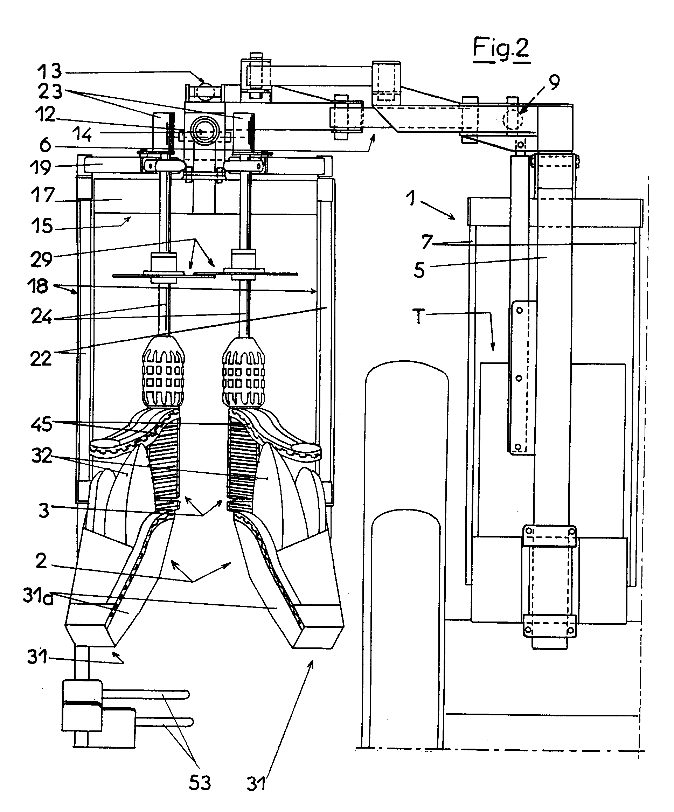

Cette machine comporte notamment un robuste châssis 1 permettant son installation à l'avant ou à l'arrière du tracteur T et portant une tête de palissage destinée à occuper une position latérale par rapport à ce dernier, cette tête de palissage comprenant principalement :
- deux ensembles sensiblement identiques de relevage des fils releveurs F et de la végétation, désignés dans leur ensemble par la référence 2 aux figures 1 et 2 et disposés de part et d'autre du plan de symétrie de ladite tête de palissage ;
- un dispositif de rapprochement et de guidage des fils relevés, désigné dans son ensemble par la référence 3 aux figures 1 et 2, et disposé en arrière de chaque système de relevage 2 ;
- et un système d'agrafage ou de liage desdits fils, placé à la suite des dispositifs de guidage 3, en considérant le sens d'avancement de la machine, en cours de travail, et désigné dans son ensemble par la référence 4 à la figure 1.

Le châssis 1 comprend une potence porteuse 5-6 dont le montant 5 est rigidement solidaire d'un bâti 7 de renforcement et de montage. Le montant 5 est avantageusement exécuté en deux parties assemblées de manière télescopique et reliées par un vérin hydraulique 8 disposé parallèlement auxdites parties et permettant de régler la longueur dudit montant et, par conséquent, également le niveau de la tête de palissage, en fonction des caractéristiques et de la hauteur de la végétation des plantes à palisser.

La traverse ou élément horizontal 6 de la potence porteuse qui est déportée latéralement par rapport au montant 5, est constituée, de manière connue en soi, par un système de parallélogramme déformable dont les grands côtés constituent la traverse proprement dite.

La tête de palissage décrite dans la suite du présent exposé, est suspendue au petit côté mobile de ce système de parallélogramme déformable, et se trouve placée latéralement par rapport au tracteur portant la machine en vue de son utilisation, et ce système permet de régler l'espacement entre ledit tracteur et ladite tête de palissage tout en maintenant cette dernière dans la position souhaitable. Le pivotement de la traverse, c'est-à-dire la déformation du parallélogramme articulé, est assuré au moyen d'un vérin hydraulique 9 relié, par l'intermédiaire de ses extrémités opposées et au moyen d'articulations, au bras 6a constituant le petit côté fixe dudit parallélogramme et à un grand côté mobile 6b de ce dernier.

Le petit côté mobile 6c du parallélogramme déformable comporte un prolongement latéral 6d lequel est rigidement solidaire d'un bâti porteur 10 auquel est suspendue la tête de palissage ou palisseuse proprement dite, par l'intermédiaire d'un bâti de suspension 11 portant l'ensemble des dispositifs de relevage, de guidage et d'agrafage. Le bâti de suspension 11 est suspendu au bâti porteur 10, au moyen d'une articulation comprenant un axe d'articulation transversal 12. De la sorte, le bâti de suspension 11 et, par conséquent, la tête de palissage suspendue à ce bâti, peuvent basculer d'avant en arrière et vice-versa, en considérant l'axe de progression de la machine en cours de travail. Les mouvements de basculement de la palisseuse sont amortis par un vérin 13 (ou par un ressort) de sécurité fixé, par l'intermédiaire de ses extrémités opposées et au moyen d'articulations, à des chapes d'attache 10a, 11a rigidement solidaires, respectivement, du bâti porteur 10 et du bâti de suspension 11.

Sur ce dernier, est suspendu, au moyen d'une articulation comprenant un axe 14 disposé dans le plan de symétrie de la tête de palissage, un châssis principal 15 portant les dispositifs de relevage et de guidage et sur la partie arrière duquel est suspendu un châssis auxiliaire 16 portant le dispositif d'agrafage. De la sorte, les châssis 15 et 16 et, par suite, l'ensemble de la tête de palissage proprement dite, sont montés avec une aptitude de basculement, à droite et à gauche, dans un plan perpendiculaire à l'axe d'avancement de la machine.

Le châssis principal 15 comprend notamment :
- une robuste traverse horizontale supérieure 17 ;
- deux montants verticaux 18 rigidement solidaires des extrémités de cette traverse et orientés vers le bas.

A sa partie supérieure, chaque montant 18 est muni d'un petit bras horizontal 19, orienté vers l'avant et rigidement solidaire dudit montant. Sur ce bras est fixé, horizontalement, par l'intermédiaire de l'une de ses extrémités et au moyen d'une articulation, un vérin 20 à simple effet et à rappel hydraulique, dont l'autre extrémité est reliée, également au moyen d'une articulation, à un second bras horizontal 21 monté fixement sur le sommet d'un axe vertical pivotant 22 porté et guidé par le bras fixe 19 et qui s'étend vers le bas, sur la quasi totalité de sa longueur ; le bras 21 pouvant ainsi pivoter en même temps que ledit axe. Au voisinage de son extrémité inférieure, l'axe 22 est maintenu et guidé dans un manchon 30 rigidement relié au montant voisin 18 du châssis 15.

Chaque bras pivotant 21 porte, à son extrémité libre, un moteur hydraulique 23 accouplé à un arbre de transmission vertical 24 suspendu à ladite extrémité.

Sur chacun des deux arbres 24, sont successivement calés, de manière symétrique en considérant un sens ascendant :
- une première roue d'entrainement 25 formée par une noix à empreintes et donnant le mouvement au dispositif de relevage de fil et aux moyens de canalisation de végétation inférieurs ;
- un cylindre de guidage 26 constituant le dispositif de guidage 3 du fil relevé ;
- une deuxième roue d'entraînement 27 également formée par une noix à empreintes et donnant le mouvement à un dispositif de canalisation de végétation supérieur ;
- un manchon de protection et d'accompagnement 28 ;
- un dispositif de coupe et d'accompagnement 29.

Chaque dispositif de relevage de fil et de canalisation de végétation ou releveur principal comprend un carter-déflecteur 31 dont la paroi interne a une orientation convergeant, d'avant en arrière, en direction du plan de symétrie P-P de la tête de palissage. Ces carters-déflecteurs sont rigidement fixés à l'extrémité inférieure des arbres 22, par l'intermédiaire de leur côté extérieur.

Chaque carter-déflecteur porte un diabolo rotatif 32 constitué par un disque de forme générale tronconique dont la grande base est orientée en direction du plan de symétrie de la tête de palissage. A sa périphérie, ce disque tronconique est muni d'une gorge circulaire 33 dans le fond de laquelle sont disposées des barrettes transversales 34, par exemple espacées de 60 degrés.

Chaque diabolo est muni, sur son bord périphérique de plus grand diamètre, d'une pluralité d'ergots radiaux 35 de relevage espacés, par exemple de 30 degrés. Ces ergots 35 comportent un talon 35a orienté en direction de l'axe du diabolo et formant une saillie radiale sur la face extérieure convexe de celui-ci.

Les diabolos 32 ont principalement pour fonctions de relever les fils releveurs qui reposent au sol et de les placer dans leur gorge 33.

Les barrettes 34 et les talons 35a permettent de provoquer une vibration des fils releveurs, en cours de travail, afin que lesdits fils puissent glisser plus facilement sur le feuillage des plantes, arbustes ou arbrisseaux.

La mise en rotation de chaque diabolo 32 est assurée au moyen de la roue d'entraînement 25 et d'un lien articulé avantageusement constitué par une chaîne calibrée 36 s'enroulant sur cette dernière et sur une roue menée 37 installée à l'extrémité avant du carter-déflecteur 31, ladite chaine s'enroulant également dans une gorge à empreintes 38 dont est munie, périphériquement, le diabolo, au voisinage de sa petite basse, et sur un certain nombre de roues de renvoi 39.

La chaîne calibrée 36 est constituée par une chaine à maillons ronds perpendiculaires 36a, d'un type couramment utilisé en manutention. D'autre part, les différentes roues sur lesquelles s'enroule cette chaîne sont constituées par des noix à empreintes dont la gorge 40 est adaptée à la conformation de la chaîne.

De même, la gorge à empreintes 38 des diabolos 32 est adaptée à la conformation de la chaîne.

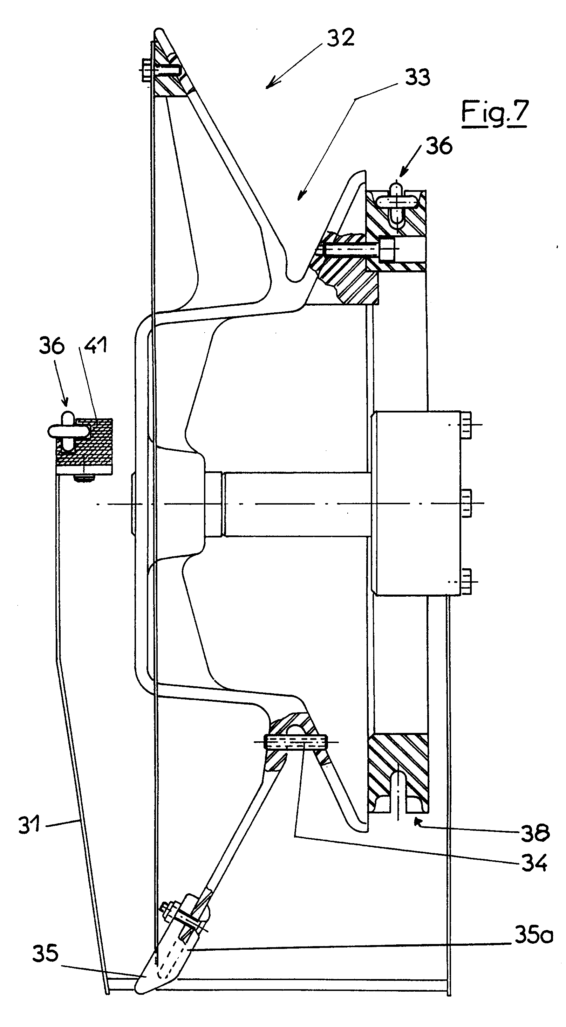

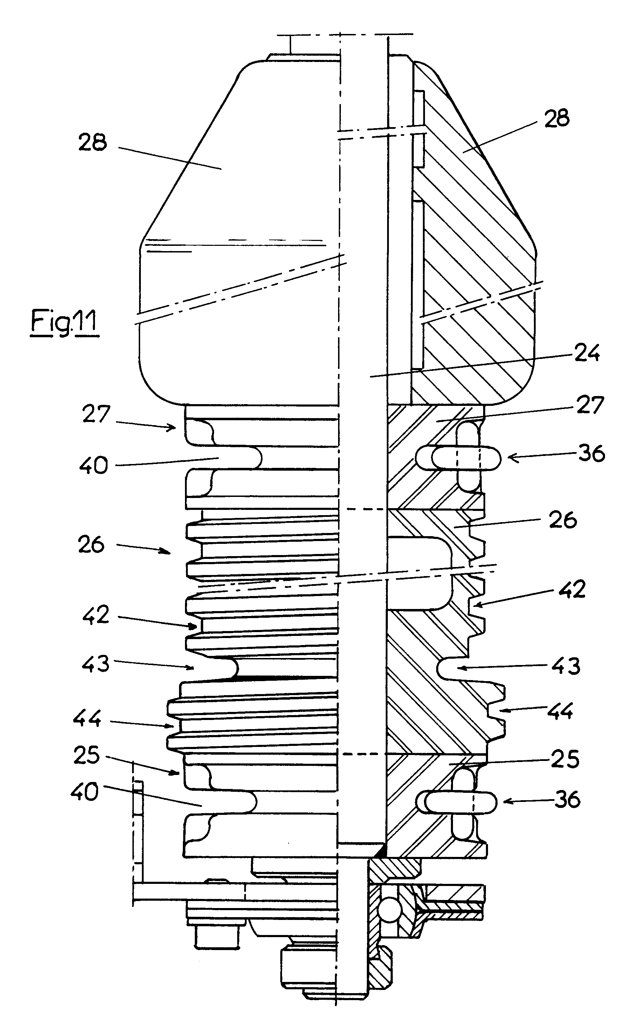

Le bord supérieur interne de chaque carter-déflecteur 31 est muni d'un chemin de guidage 41 constitué, par un profilé en matière plastique comportant deux gorges perpendiculaires 41a, 41b s'ouvrant dans l'angle supérieur interne dudit profilé, de manière que les maillons espacés de la chaîne qui circulent dans la gorge horizontale 41a du chemin de guidage 41, débordent latéralement par rapport à la face interne dudit chemin de guidage (figures 7 et 10).

Chaque cylindre de guidage 26 est doté, extérieurement, d'une gorge hélicoïdale 42 aboutissant dans une gorge circulaire inférieure 43. D'autre part, au-dessous de la gorge circulaire 43, chaque cylindre comporte une gorge hélicoïdale 44 de faible hauteur et de sens contraire à celui de la gorge 42. La vis sans fin constituée par la gorge hélicoïdale 42 a pour fonction de guider les fils de palissage relevés par les diabolos 32, dans la gorge circulaire 43. D'autre part, la vis sans fin à sens contraire constituée par la gorge hélicoïdale inférieure 44 a pour fonction de ramener les fils dans la gorge circulaire 43, pour le cas où ils s'échapperaient de celle-ci.

Chaque dispositif de canalisation de végétation supérieur placé au-dessus du dispositif de relevage et de guidage inférieur disposé sur le même côté, comprend un carter-déflecteur 45 dont la paroi interne a une orientation convergeant, d'avant en arrière, en direction du plan de symétrie de la tête de palissage. Les carters déflecteurs 45 sont rigidement reliés aux carters-déflecteurs 31 par l'intermédiaire d'une plaque 46.

Le bord supérieur interne de chaque carter-déflecteur 45 est équipé d'un chemin de guidage 47 analogue au chemin de guidage 41 et dans lequel peut circuler une chaine calibrée 48 analogue à la chaîne 36 et s'enroulant sur la noix à empreintes motrice 27 et sur une noix à empreintes menée 49 disposée à l'extrémité avant dudit carter-déflecteur.

Les noix à empreintes menées 37 et 49 sont montées, de manière connue en soi, sur des supports mobiles permettant un réglage de la tension des chaînes 36 et 48.

On comprend que la chaîne inférieure 36 a une double fonction : - la transmission du mouvement moteur au diabolo releveur 32 ; - le relevage et l'accompagnement des sarments ou rameaux relevés.

D'autre part, la chaîne supérieure 48 a également une double fonction : - le guidage et l'accompagnement des sarments ou rameaux relevés ; - l'écartement de ces derniers par rapports aux ergots 35 du diabolo 32, afin d'éviter le bourrage.

Le manchon de protection et de guidage 28 est exécuté dans un matériau semi-rigide et il est pourvu de stries verticales 28a et de stries périphériques 28b. Il présente un diamètre supérieur aux diamètres des noix d'entraînement 25 et 27 et du cylindre fileté 26 de guidage de fils.

Ce manchon a pour fonctions d'une part, de protéger des chocs, au passage des piquets, les différents organes d'entraînement et de guidage disposés au-dessous dudit manchon et, d'autre part, de maintenir les sarments en position relevée.

Les organes de coupe 29 (figure 12) comprennent un couteau rotatif 50 calé sur l'arbre 24 et constitué par un plateau circulaire 50a sur la périphérie duquel sont fixées, de manière interchangeable, des lames coupantes radiales 50b. D'autre part, au-dessus du couteau 50 à lames radiales, est montée une contre-lame 51 constituée d'un porte-lame 51a monté, par l'intermédiaire d'une bague de friction, sur le moyeu du couteau rotatif 50, et de la contre-lame 51b proprement dite fixée, de manière interchangeable, sur ledit porte-lame.

Afin de permettre l'immobilisation de la contre-lame 51, le porte-lame est rigidement solidaire d'un levier 52 orienté radialement et qui, lors de la mise en rotation de l'arbre 24, bute contre le montant voisin 18.

Ces organes de coupe produisent une coupe par cisaillement. Ils sont équipés de moyens connus en soi permettant le réglage de leur position en hauteur, le long des arbres 24, ces moyens étant, par exemple, constitués par des brides de serrage à vis disposées au-dessous et au-dessus du moyen de l'ensemble lame et contre-lame. En outre, les organes de coupe ont une position décalée dans la direction verticale et ils se chevauchent, dans le plan vertical de symétrie de la tête de palissage.

Les organes de coupe 29 ont pour double fonction : - d'accompagner les sarments ou rameaux relevés; - d'écimer ceux d'entre eux qui ont une longueur trop importante.

Les diabolos 32, les rampes de canalisation de végétation 41-36 et 47-48, la vis sans fin 26, les manchons 28 et les organes de coupe 29, constituent les deux ensembles de relevage et de guidage des fils releveurs et de canalisation de la végétation relevée, et ces ensembles sont disposés de part et d'autre du plan de symétrie de la tête de palissage de la machine, avec une ouverture d'entrée d'amplitude réglable au moyen des vérins 20. Ces deux ensembles ont une disposition convergente en direction dudit plan de symétrie, grâce à laquelle les branches et rameaux (sarments) des plantes et des fils releveurs du palissage sont progressivement rassemblés et rapprochés, respectivement, de façon à faciliter le ceinturage desdites plantes et l'opération terminale de liaison desdits fils releveurs.

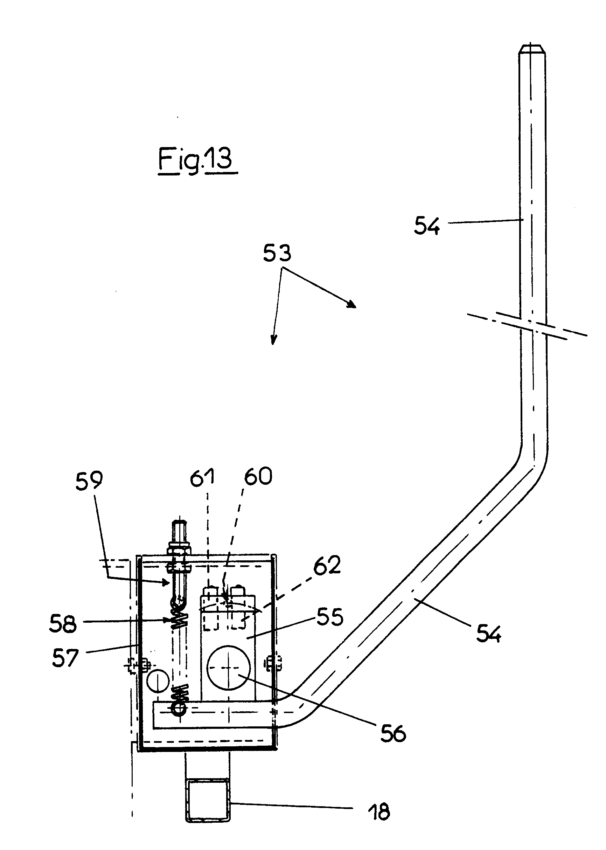

A sa partie inférieure, l'un au moins des ensembles de relevage et de guidage est équipé d'au moins un dispositif de guidage et de centrage automatique de la palisseuse sur le rang de ceps de vigne ou de souches d'arbustes. Selon l'exemple de réalisation illustré, seul l'ensemble de relevage et de guidage extérieur par rapport au tracteur portant la machine est équipé d'un tel dispositif constitué de deux patins de détection et de guidage 53 disposés l'un à la suite de l'autre et montés à l'extrémité inférieure du montant extérieur 18 du châssis de la palisseuse proprement dite. Chacun de ces patins (figure 13) comprend un palpeur 54 constitué par une tige doublement coudée. Ce palpeur est fixé avec une aptitude de pivotement, au moyen d'une petite embase 55, autour d'un axe vertical 56, logé dans un boîtier 57. Il est assujetti à l'extrémité d'un ressort de rappel constitué par un ressort de traction 58 dont l'autre extrémité est fixée à un système d'attache 59, connu en soi, permettant de régler sa tension. A son extrémité libre, l'embase pivotante 55 est munie d'un aimant 60. D'autre part, au-dessous de l'aimant et, plus précisément, au-dessous ou à proximité des extrémités de la trajectoire de celui-ci, sont disposés deux capteurs de proximité 61, 62 avantageusement constitués par des capteurs magnétiques, par exemple des capteurs à effet Hall.

Ces capteurs sont montés sur le circuit électrique de commande de l'électrovanne commandant le fonctionnement du vérin 9 de positionnement de la tête de palissage.

Lorsque la palisseuse est parfaitement positionnée, les palpeurs 54 se trouvent pivotés dans une position intermédiaire, entre leurs deux positions extrêmes.

Lorsque la palisseuse est trop serrée vers le tracteur, les palpeurs, par suite de leur appui sur les souches des plantes, se trouvent pivotés jusqu'à l'une de leurs position extrêmes et l'aimant 60 se trouve disposé à proximité d'un capteur qui envoi un signal en direction de l'électro-vanne de commande du vérin par l'intermédiaire duquel s'opère le recentrage de ladite palisseuse.

Si la palisseuse s'écarte du tracteur, les palpeurs n'étant plus en appui contre les souches des plantes, pivotent jusqu'à leur position extrême opposée et l'aimant 60 se trouve disposé à proximité du second capteur qui envoie un signal en direction de l'électro-vanne de commande du vérin par l'intermédiaire duquel s'opère le recentrage de la tête de palissage. Toutefois, dans ce cas, la correction de position n'est opérée que si les deux palpeurs occupent la position susmentionnée.

Le vérin 9 qui assure le positionnement correct de la palisseuse proprement dite peut être équipé d'un dispositif permettant de limiter le rapprochement de cette dernière en direction du tracteur, afin d'éviter les chocs. Ce dispositif peut être constituée par un aimant encastré dans la tige du vérin et par un capteur magnétique monté fixement à proximité dudit aimant, par exemple dans un support disposé autour de ladite tige.

Il est possible de neutraliser le dispositif électronique de guidage automatique, par exemple dans les cas où il y a une interruption de plantes dans les rangs.

La position des patins 53 est réglable en hauteur, par l'intermédiaire de tout moyen adéquat connu en soi.

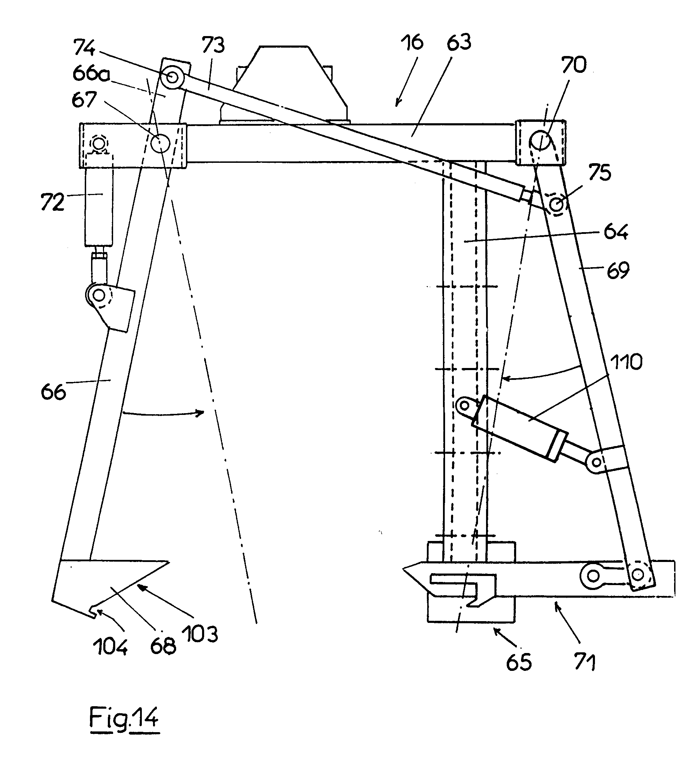

Le châssis auxiliaire 16 portant le système d'agrafage comprend une poutre transversale 63. Sur cette poutre, sont fixés :
- une jambe verticale 64 dont l'extrémité supérieure est rigidement rattachée à la poutre ; cette jambe est fixée à courte distance de l'une des extrémités de cette dernière et son extrémité inférieure porte la partie statique de l'agrafeuse désignée dans son ensemble par la référence 65 à la figure 14 ;
- un premier bras 66 suspendu, avec une aptitude de basculement dans un plan transversal, par l'intermédiaire de sa partie supérieure et au moyen d'un axe d'articulation 67, à courte distance de l'autre extrémité de la poutre ; l'extrémité inférieure de ce bras étant munie d'une aiguile ou fourchette 68 destinée à rapprocher l'un des fils releveurs relevé en direction de l'autre et à le maintenir durant l'opération d'agrafage ;
- un deuxième bras 69 suspendu, avec une aptitude de basculement dans un plan transversal, par l'intermédiaire de son extrémité supérieure et au moyen d'un axe d'articulation 70, à l'extrémité de la poutre proche de la jambe verticale 64 ; l'extrémité inférieure de ce bras porte la partie mobile 71 de l'agrafeuse, que l'on nommera "flèche" dans la suite du présent exposé.

Le pivotement synchronisé des bras basculants 66 et 69 dans un plan transversal, perpendiculaire à l'axe de progression de la machine, dans le but de rapprocher ou d'éloigner l'une de l'autre la fourchette de maintien 68 et la flèche d'agrafage 71, est assuré par :
- un vérin 72 relié, par l'intermédiaire de ses extrémités opposées et au moyen d'articulations, à la poutre 63 et à une attache solidaire du bras 66 et disposée au-dessous de l'axe de pivotement 67 de celui-ci ;
- une biellette 73 reliée, par l'intermédiaire de ses extrémités opposées et au moyen d'articulations sphériques (rotules) 74, 75, d'une part, à l'extrémité supérieure 66a du bras 66 disposée au-dessus de l'axe de pivotement 67 de ce dernier et, d'autre part, à une attache solidaire du second bras 69 et disposée au-dessous de l'axe de pivotement 70 de celui-ci.

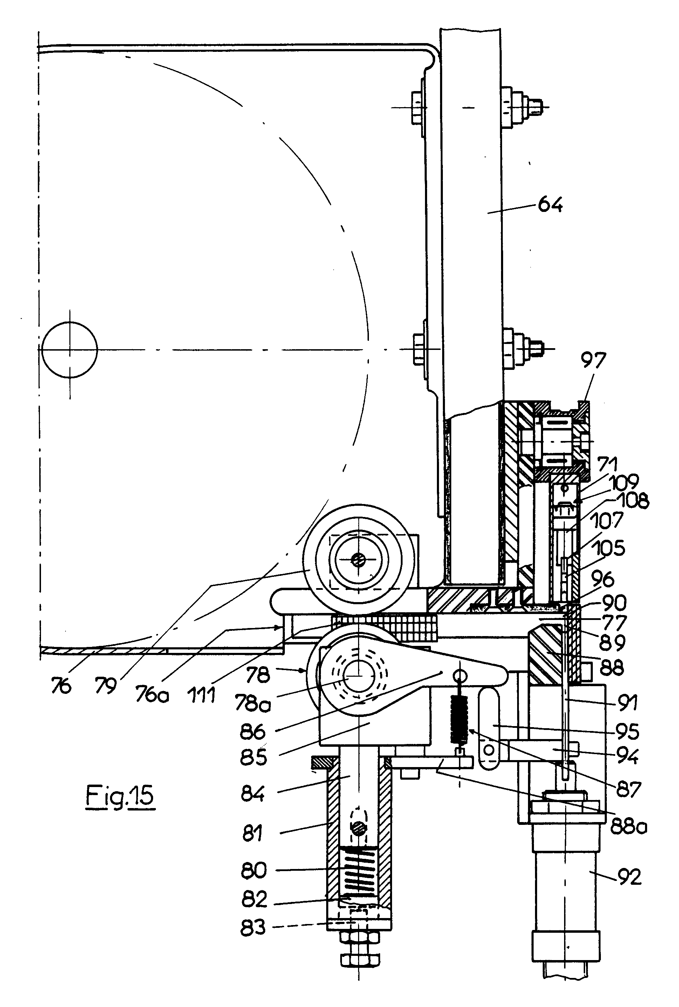

Le chargeur d'agrafe comprend un boîtier 76 (partiellement représenté à la figure 15) et pouvant recevoir un stock d'agrafes liées les unes aux autres, de manière à constituer une bande qui peut être enroulée et logée, sous forme de rouleaux, dans ledit boîtier. Le boîtier 76 est fixé sur la jambe verticale 64, et sa sortie 76a débouche dans un couloir de guidage 77.

Une paire de galets d'entraînement comprenant un galet moteur inférieur 78 et un galet d'appui supérieur 79, est installée à l'entrée du couloir de guidage. De manière avantageuse, le galet moteur 78 est constitué par une roue libre dont le moyeu 78a peut tourner librement dans un sens, sans entraîner un mouvement de ladite roue, tandis que sa rotation dans le sens opposé entraîne une rotation correspondante de cette dernière.

La pression du galet moteur contre le fond des agrafes peut être réglée au moyen d'un dispositif comprenant, par exemple, un ressort de compression 80 logé dans un guide tubulaire 81 et calé, par l'intermédiaire de ses extrémités opposées, d'une part, contre une butée circulaire mobile 82 s'appuyant sur l'extrémité d'une vis axiale 83 se vissant dans l'extrémité dudit guide et, d'autre part, contre l'extrémité libre d'une colonnette 84 montée avec une aptitude de coulissement axial dans le guide 81 et rigidement solidaire du support 85 de la roue libre.

Le moyeu 78a de cette dernière est rigidement solidaire d'un levier pivotant 86 fixé à l'une des extrémités d'un ressort de traction 87 relié, par son extrémité opposée, à une pièce fixe 88a du bâti 88 de l'agrafeuse, ce ressort assurant le pivotement dudit levier dans un sens correspondant à sa course active.

Le couloir de guidage débouche dans une chambre d'attente 89 ménagée à l'intérieur du bâti 88, cette chambre étant conformée et dimensionnée pour recevoir une agrafe introduite par le dispositif de chargement précédemment décrit. La chambre 89 comporte une ouverture supérieure de sortie 90 permettant l'expulsion vers le haut de l'agrafe qu'elle renferme. Au-dessous de ladite chambre, est disposé un poussoir 91 mobile verticalement et actionné par un petit vérin sous-jacent 92. Ce poussoir est logé, avec une aptitude de coulissement, dans un couloir vertical débouchant dans le fond de la chambre d'attente 89 et ménagé dans un guide fixe 93 rigidement solidaire du bâti 88 et dans la partie supérieure duquel est exécutée ladite chambre. Le poussoir 91 est rigidement solidaire d'une platine horizontale 94 portant un doigt vertical 95 orienté vers le haut. L'extrémité supérieure de ce doigt se trouve au contact de la face inférieure du levier 86 dont il assure le pivotement dans le sens opposé à celui du basculement obtenu au moyen du ressort 87. Le bord supérieur 96 de la sortie du couloir de guidage 77 présente une arête vive formant guillotine permettant de séparer l'agrafe logée dans la chambre d'attente, de la bande d'agrafes, lorsque le poussoir 91 se déplace vers le haut en vue d'assurer l'expulsion de ladite agrafe à travers l'ouverture supérieure de sortie 90 de ladite chambre.

La partie statique de l'agrafeuse qui vient d'être décrite comporte encore deux paires de galets épaulés 97 assurant le guidage de la flèche mobile d'agrafage, ces galets étant portés par la face postérieure du bâti fixe de l'agrafeuse.

La flèche 71 du dispositif d'agrafage est fixée à l'extrémité inférieure du bras 69 au moyen d'une articulation à deux rotules 98. Cette flèche comporte un corps de forme allongée et rectiligne dont l'extrémité libre est constituée par une aiguille présentant deux biseaux 99, 100 inversement orientés. D'autre part, dans sa partie avant et à sa base, elle présente une encoche 101 qui, pour ne pas gêner le coulissement de ladite flèche entre les galets 97 de la partie statique de l'agrafeuse et pour une commodité de construction, est prévue dans une plaque 102 rapportée sur la face postérieure du corps de la flèche, avec un dégagement permettant son passage devant le galet inférieur le plus proche du centre de la palisseuse.

Le biseau inférieur 99 a pour fonction de guider l'un des deux fils releveurs dans l'encoche 101.

Dans le même but, la fourchette ou aiguille 68 montée à l'extrémité inférieure du bras 66, présente un bord biseauté 103 orienté vers le bas et aboutissant dans une encoche 104.

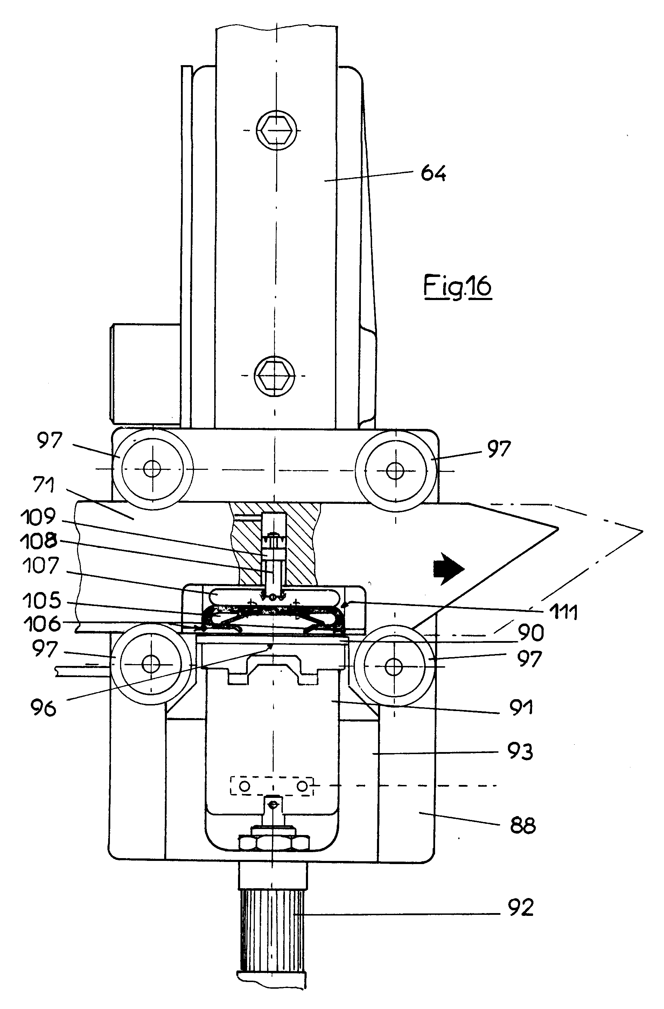

A proximité de son extrémité libre, la flèche 71 comporte un logement 105 s'ouvrant vers le bas, ce logement étant conformé et dimensionné pour recevoir une agrafe selon l'invention, décrite dans la suite du présent exposé. Lorsque la flèche 71 se trouve en position d'ouverture ou de recul vers l'extérieur, le logement 105 se trouve disposé exactement au-dessus de la chambre d'attente 89 avec laquelle il communique (figures 15 et 16).

Les parois latérales opposées du logement 105 sont pourvues, symétriquement, d'un petit bossage 106, permettant la retenue de l'agrafe introduite dans ledit logement.

A la partie supérieure du logement 105, est installé un éjecteur comprenant une barrette ou papillon de poussée 107 reliée, par l'intermédiaire de sa partie centrale, à la tige ou organe mobile 108 d'un petit vérin 109. Le papillon 107 a une longueur correspondant sensiblement à celle des agrafes utilisées, et il peut comporter, dans sa partie inférieure, un évidement central (non représenté) délimitant deux semelles d'appui opposées grâce auxquelles des forces de poussées parfaitement équilibrées sont appliquées au dos de l'agrafe engagée dans le logement 105, lors de son expulsion et de son application sur les fils releveurs.

Une pompe pneumatique à double effet 110 relie le bras fixe 64 équipé du boîtier statique 65 de l'agrafeuse et le bras basculant 69 qui porte la flèche 71 d'agrafage. Cette pompe est reliée au vérin de chargement 92 et au vérin d'agrafage 109 dont l'alimentation est commandée par des électrovannes actionnés par un système de capteurs de proximité, par exemple constitués par des capteurs magnétiques tels que des capteurs à effet Hall montés sur le boîtier statique 65 et activés par un aimant porté par la flèche 71.

Un vérin à simple effet et à rappel hydraulique 123 relie, par l'intermédiaire de ses extrémités opposées et au moyen d'articulations, un bâti 124 porté par le châssis principal 15 et le sommet du châssis auxiliaire 16 suspendu, au moyen d'une articulation comprenant un axe transversal 125, audit bâti. Le châssis 16 portant les moyens d'agrafage est ainsi suspendu au châssis 15 avec une aptitude de basculement d'avant en arrière et inversement en considérant le sens de progression de la machine. Le vérin 123 est relié en parallèle au vérin hydraulique 72.

Afin de ne pas compliquer inutilement la description et les dessins, on ne décrit pas les différents dispositifs hydrauliques, électro-mécaniques et électroniques de commande des différents moteurs et vérins de la machine, de tels dispositifs étant connus en soi.

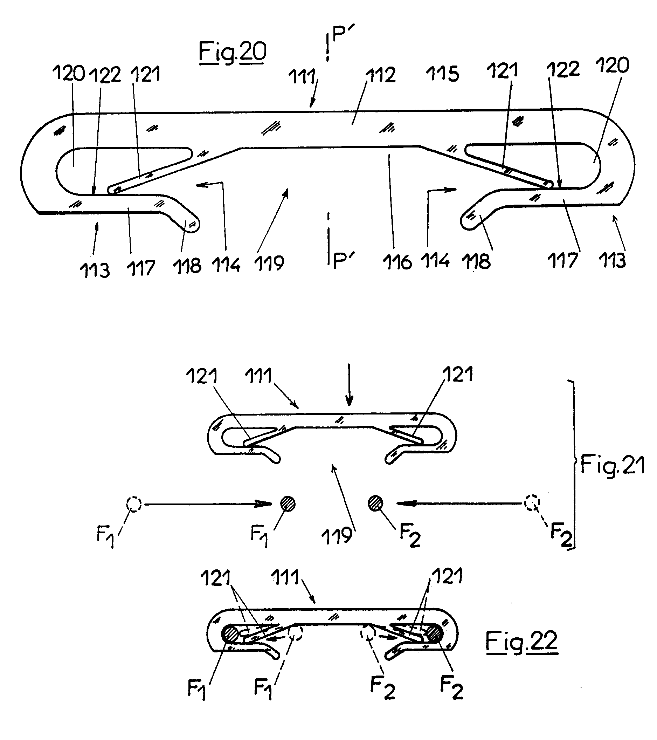

Les figures 20 à 22 illustrent l'agrafe selon l'invention et son mode de pose qui peut être opéré par la palisseuse précédemment décrite.

Cette agrafe 11 est exécutée d'une seule pièce, en toute matière plastique appropriée, de préférence bio-dégradable, présentant une certaine rigidité en même temps qu'une capacité de déformation élastique, telle que polyamide ("Nylon", par exemple).

Elle comporte un corps de forme rectiligne 112 dont les extrémités sont recourbées, de manière à constituer deux crochets opposés 113 dont les ouvertures 114 se font face.

Ce corps comporte deux faces planes opposées et il présente une surface externe 115 et une surface interne 116 planes et parallèles.

Chaque crochet comporte une branche 117 espacée du corps 112 et orientée en direction du centre ou plan transversal médian P′-P′ de l'agrafe ; les branches 117 étant parallèles ou sensiblement parallèles audit corps.

L'extrémité libre 118 des branches 117 est, de manière avantageuse, inclinée vers l'extérieur, en formant, par exemple, un angle de l'ordre de 40 degrés par rapport à la portion principale desdites branches.

Les extrémités libres 118 des branches 117 sont espacées et cet espace constitue l'ouverture d'entrée 119 de l'agrafe.

Un obstacle franchissable par déformation élastique d'au moins une partie de l'agrafe est disposé à l'entrée du logement 120 délimité par chaque crochet 113, cet obstacle étant solidaire du corps 112 ou de la branche 117 dudit crochet. Cet obstacle est avantageusement conformé pour être aisément franchi dans le sens de la pénétration dans le logement 120 et pour être infranchissable dans la direction opposée.

De manière très intéressante, chacun de ces obstacles est formé par un cliquet 121 constitué par une languette dotée d'une capacité de déformation élastique et rattachée, par l'intermédiaire de l'une de ses extrémités, au corps 112 de l'agrafe.

Les languettes 121 s'étendent du corps 112 auquel elles sont rattachées, jusqu'au contact, ou presque, de la surface interne 122 des branches 117 des crochets 113.

Plus précisément, les languettes 121 sont inclinées, par exemple, suivant un angle de l'ordre de 20 degrés, en direction de l'intérieur des crochets 113.

Elles constituent de la sorte des cliquets dont la flexion n'est posssible que dans la direction du corps 112, de façon à permettre le passage des fils en direction du fond des crochets. Dans la direction opposée, les languettes 121 butent contre les branches 117, de sorte que leur flexion dans cette direction n'est pas possible et que les fils engagés dans les logements 120 délimités par les crochets ne peuvent plus en sortir.

Selon une variante d'exécution, les languettes flexibles peuvent être rattachées au bord 122 des branches 117 des crochets 113 et s'étendre jusqu'au contact, ou presque, de la surface interne 116 du corps 112. Dans ce cas, les languettes flexibles ont également et avantageusement une position inclinée par rapport à la portion rectiligne des branches 117 qui est parallèle au corps 112, et elles s'étendent en direction du fond du logement délimité par chaque crochet.

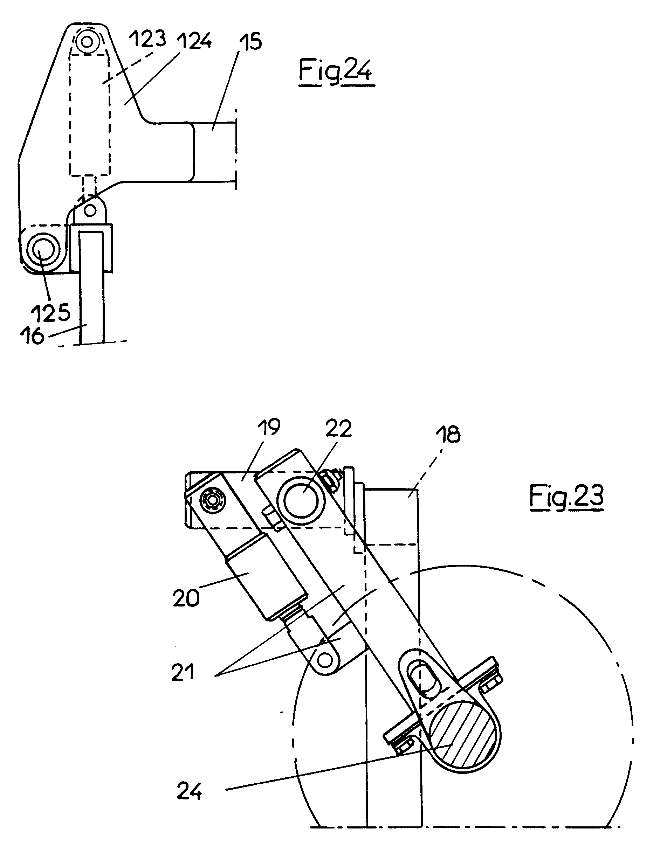

Les figures 21 et 22 montrent le mode de mise en place de l'agrafe selon l'invention sur deux fils courant côte à côte.

Les fils F1 et F2 sont rapprochés, par l'intermédiaire de la fourchette 68 et de l'extrémité de la flèche 71, et l'agrafe 111 amenée au-dessus de ces derniers avec son ouverture d'entrée 119 orientée vers le bas (figure 21). Elle est ensuite placée en chevauchement sur les deux fils, par le vérin 109.

Lorsque ces derniers sont relâchés, ils ont tendance à s'écarter et, en s'éloignant l'un de l'autre, ils provoquent le soulèvement des cliquets flexibles 121 et viennent buter dans le fonds des logements 120 dans lesquels ils se trouvent emprisonnés lors du retour desdits cliquets dans leur position de fermeture et de repos initiale (figure 22).

Les fils ainsi retenus ne peuvent plus se dégager de l'agrafe de manière fortuite.

On observe que les extrémités inclinées 118 des branches 117 ont pour rôle de garantir la retenue des fils F1, F2, lors de l'écartement de ceux-ci, les faces internes pentées de ces extrémités constituant des rampes permettant de diriger lesdits fils vers le fond des crochets 113.

D'autre part, la disposition des cliquets 121 a pour avantage de limiter l'amplitude de la flexion utile de ces derniers et de contribuer à l'action de retenue des fils F1, F2 dans les crochets 113.

La machine de palissage précédemment décrite fonctionne de la manière indiquée ci-après.

Elle est d'abord amenée à l'extrémité du rang de pieds de vigne ou autres arbrisseaux et sa tête de palissage dont les ensembles de relevage et de guidage 2-3 sont pivotés autour des axes 22 de façon à élargir l'ouverture d'entrée de la tête de palissage, et dont les parties mobiles 68, 71 du système d'agrafage sont placés en position écartée, est disposée "à cheval" sur cette extrémité.

Les ensembles de relevage et de guidage 2-3 sont mis en rotation par l'intermédiaire des moteurs 23. Les fils releveurs détendus qui se trouvent en position basse, sont crochetés par les diabolos 32 et automatiquement conduits dans la gorge 33 de ces derniers ; ils se trouvent ensuite guidés par les vis sans fin 26 jusqu'à la gorge circulaire de positionnement 43 de ces dernières. Les ensembles de relèvement et de guidage sont ensuite rapprochés et les fils releveurs relevés se trouvent maintenus dans une position invariable par lesdites gorges de positionnement.

Les sarments ou branches tombantes des arbustes sont redressés lors du relevage des fils releveurs et les chaînes 36 et 48 dont le brin actif circule d'avant en arrière, exercent une action complémentaire de relèvement sur les sarments ou branches redressées par lesdits fils releveurs ; lesdites chaînes et leurs chemins de guidage 41, 48, assurent aussi la canalisation ou accompagnement desdits sarments ou rameaux relevés, en direction de l'arrière de la tête de palissage. Comme indiqué précédemment, le manchon protecteur 28 et le dispositif de coupe 29, participent également à l'accompagnement des sarments ou rameaux relevés.

Le système d'agrafage permet de poser des agrafes 111 sur les fils releveurs F1, F2 maintenus avec un écartement constant par les vis sans fin.

Dans la position d'écartement des parties mobiles 68 et 71 du système d'agrafage, le logement 105 de la flèche 71 se trouve placé en correspondance avec la chambre d'attente 90 de la partie statique 65 de l'agrafeuse.

Le système de chargement 78-86-87 permet l'introduction d'une agrafe 111 dans la chambre d'attente 89 de ladite partie statique, et le transfert de cette agrafe dans le logement 105 de la flèche 71 est réalisé par une poussée ascendante appliquée par le poussoir 91 déplacé par le vérin 92 lui-même actionné par la pompe 110.

Les parties mobiles 68, 71 du système d'agrafage sont ensuite rapprochées par l'action du vérin 72 et, en fin de course, les fils releveurs F1, F2 se trouvent pris et maintenus dans les encoches des fourchettes ou aiguilles desdites parties, tandis que le logement 105 contenant l'agrafe 111 se trouve placé au-dessus desdits fils. Cette agrafe est enfin expulsée de son logement et appliquée sur les fils immobilisés, par l'action de l'éjecteur 106-107-108 actionné également par la pompe 110.

On observe :
- que lors de son pivotement vers l'intérieur, le bras 69 assure une compression d'air dans l'une des chambres de la pompe 110 et, lorsque la flèche 71 arrive en butée, l'un des capteurs équipant la partie statique de l'agrafeuse envoie un signal au dispositif qui assure l'ouverture d'un électro-distributeur qui libère l'air comprimé actionnant le piston du vérin 109 d'éjection de l'agrafe ;
- que lors du rapprochament des bras 66 et 69, le vérin 123 assure le basculement du châssis 16 vers l'arrière, afin que l'agrafeuse soit statique (alors que le tracteur continue d'avancer) pendant le court instant correspondant à l'opération d'agrafage.

Le vérin 123 a également pour fonction d'assurer la sécurité en cas de rencontre d'un obstacle (piquet).

Après l'éjection de l'agrafe et son application sur les fils releveurs F1, F2, les parties mobiles 68, 71 du système d'agrafage sont replacées dans leur position d'écartement initial, par l'action du vérin 72. Comme indiqué précédemment, lorsque les fils sont relâchés, ils s'engagent automatiquement dans les logements 120 de l'agrafe 111 dans lesquels ils se trouvent alors emprisonnés.

Lorsque les parties mobiles 68, 71 du système d'agrafage sont écartées, le poussoir 91 redescend et le ressort 87 peut communiquer un mouvement de rotation à la roue libre 78 qui assure l'avancement de la bande d'agrafes dans le couloir de guidage 77 et l'introduction d'une nouvelle agrafe dans la chambre d'attente 89.

Lorsque les bras 66 et 69 s'écartent, ils assurent une compression d'air dans la seconde chambre du vérin 110. Lorsque le second capteur est activé par le passage de l'aimant porté par la flèche 71, il commande un second électrodistributeur qui libère l'air comprimé actionnant le vérin 92 qui introduit une nouvelle agrafe dans la chambre d'attente 89 de la partie statique de l'agrafeuse.

L'agrafage peut être commandé par l'opérateur à partir du poste de pilotage, ou automatiquement, au moyen d'un dispositif de temporisation connu en soi commandant la pose d'agrafes à des intervalles de temps réguliers.

De manière très avantageuse, l'agrafe 111 selon l'invention est réalisée sous forme de bandes d'agrafes comprenant une pluralité d'unités liées entre elles de façon précaire par l'intermédiaire des bords longitudinaux de leurs dos 115. De la sorte, cette bande d'agrafes peut être introduite sous forme de rouleau dans le réservoir d'agrafes 76 de l'agrafeuse et chaque agrafe peut être ainsi aisément détachée du reste de la bande, sous la poussée du poussoir 91, pour être introduite unitairement dans la chambre d'attente 89 du dispositif de chargement de ladite agrafeuse.

## Revendications

1. Machine de palissage pour la vigne ou autres plantes disposées en rangs, au moyen de fils releveurs placés de chaque côté des rangs et d'agrafes, comportant deux ensembles de relevage et de guidage des fils releveurs (F) et de la végétation, disposés de part et d'autre du plan de symétrie (P-P) de sa tête de palissage et comprenant, chacun, des moyens (32, 36, 48) de relevage et de guidage des fils releveurs du palissage et de la végétation, caractérisée en ce que les moyens de relevage et de guidage des fils releveurs (F) comprennent des diabolos rotatifs (32) munis d'ergots périphériques (35) permettant de saisir automatiquement les fils releveurs en début de rang, et en ce qu'elle comprend également des organes de guidage et de rapprochement (3) des fils relevés, distincts desdits moyens de relevage (32, 36, 48) et disposés en arrière de ces derniers, ces organes étant agencés pour rapprocher lesdits fils dans une position rendant possible leur assemblage au moyen d'agrafes, et un dispositif de liage ou agrafage (4) des fils relevés et rapprochés, placé à la suite desdits organes de guidage (3), ce dispositif étant, de préférence, d'un genre permettant la pose d'agrafes d'assemblage desdits fils en position rapprochée.

2. Machine de palissage selon la revendication 1, caractérisée en ce que chaque diabolo (32) est constitué par un disque muni, sur sa périphérie, d'une gorge circulaire (33) pour le guidage de l'un des fils releveurs (F) du palissage.

3. Machine de palissage suivant la revendication 2, caractérisé en ce que les diabolos (32) ont une forme générale tronconique, et en ce que les ergots (35) sont disposés sur leur bord périphérique de plus grand diamètre.

4. Machine de palissage selon l'une quelconque des revendications 1 à 3 caractérisée en ce que les diabolos (32) sont montés avec une orientation réglable.

5. Machine de palissage selon l'une quelconque des revendications 1 à 4, caractérisée en ce qu'elle comporte des moyens de canalisation (36, 48) des branches ou rameaux relevés, ces moyens étant disposés en arrière des moyens de relevage (32) des fils releveurs, en considérant le sens de progression de la machine.

6. Machine de palissage suivant la revendication 5, caractérisée en ce que chaque moyen de canalisation de végétation comprend au moins un lien souple sans fin (36, 48) s'enroulant sur des roues motrices (25, 27) et menées (37, 49) et dont le brin actif est disposé, sur au moins une portion de sa longueur, devant le côté interne des diabolos (32) de relevage.

7. Machine de palissage selon la revendication 8, caractérisée en ce que chaque moyen de canalisation de végétation actif comprend au moins une chaîne calibrée (36, 48) constituée, de façon connue en soi, de maillons perpendiculaires.

8. Machine de palissage suivant l'une des revendications 6 ou 7, caractérisée en ce que le lien souple sans fin (36, 48) circule dans un chemin de guidage rigide (41), constitué par le bord supérieur interne d'un carter-déflecteur (31) portant le diabolo (32) et dont la face interne a une inclinaison convergeant en direction du plan de symétrie (P-P) de la tête de palissage.

9. Machine de palissage selon l'une quelconque des revendications 6 à 8, caractérisée en ce que chaque ensemble de canalisation de végétation comprend deux liens souples sans fin (36, 48) disposés l'un au-dessus de l'autre.

10. Machine de palissage suivant l'une quelconque des revendications 1 à 9, caractérisée en ce que les moyens ou ensembles de guidage des fils releveurs relevés (3) comprennent un cylindre rotatif (26) doté, extérieurement, d'une gorge hélicoïdale (42) aboutissant dans une gorge circulaire inférieure (43).

11. Machine de palissage selon la revendication 10, caractérisée en ce que le cylindre de guidage rotatif comporte une seconde gorge hélicoïdale de faible hauteur (44) disposée au-dessous de la gorge circulaire (43).

12. Machine de palissage selon l'une quelconque des revendications 1 à 11, caractérisée en ce que chaque ensemble de relevage et de guidage comporte un manchon strié (28) disposé au-dessus du cylindre rotatif de guidage 26 et dont le diamètre est plus important que celui dudit cylindre et que celui des roues assurant l'entraînement des liens souples sans fin (36, 48).

13. Machine de palissage selon l'une quelconque des revendications 1 à 12, caractérisé en ce que chaque ensemble de relevage et de guidage comporte, à sa partie supérieure, un organe de coupe (29) réglable en hauteur.

14. Machine de palissage suivant l'une quelconque des revendications 1 à 13, caractérisée en ce que les deux ensembles de relevage et de guidage (31-32-36-48-26-28-29) sont montés avec une aptitude de pivotement autour d'un axe vertical (22) permettant de régler l'amplitude de l'ouverture d'entrée de la tête de palissage de ladite machine.

15. Machine de palissage selon l'une quelconque des revendications 1 à 14, caractérisée en ce que le système d'agrafage comprend :
- une partie statique comprenant un chargeur d'agrafes (76), une chambre d'attente (89) comportant une ouverture supérieure d'expulsion (90) et conformée pour recevoir une agrafe, un dispositif (78-86-87) pour l'introduction unitaire des agrafes dans cette chambre et un poussoir (91) mobile verticalement et disposé au-dessous de ladite chambre d'attente pour l'expulsion de l'agrafe logée dans cette dernière ;
- une partie mobile ou flèche (71) guidée par ladite partie statique et comportant, à proximité de son extrémité libre, un logement (105) s'ouvrant vers le bas et conformé pour recevoir une agrafe (111), un éjecteur (107-108-109) étant installé à la partie supérieure dudit logement ;
- des moyens assurant les déplacements de ladite flèche pour l'amener dans une position suivant laquelle son logement (105) se trouve placé au-dessus et en correspondance de la chambre d'attente (89) de la partie statique ou dans une position selon laquelle ledit logement se trouve disposé au-dessus des fils relevés et rapprochés du palissage.

16. Machine de palissage selon la revendication 15, caractérisée en ce que le dispositif d'entraînement de la bande d'agrafes logé dans le chargeur (76) comprend une roue libre (78) dont le moyeu (78a) est rigidement solidaire d'un levier pivotant (86) fixé à l'une des extrémités d'un ressort de traction (87) dont l'autre extrémité est assujettie à une pièce fixe (88a) de l'agrafeuse, ce ressort assurant le pivotement de ce levier dans un sens ; le basculement de ce dernier dans le sens opposé étant assuré par un doigt vertical (95) solidaire du poussoir (61) de la partie statique de l'agrafeuse et dont l'extrémité supérieure se trouve disposée au-dessous dudit levier.

17. Machine de palissage selon la revendication 14, caractérisée en ce que le système d'agrafage comprend deux aiguilles ou fourchettes (68, 102) mobiles dans un plan transversal pour le rapprochement et le maintien des fils du palissage lors de la pose des agrafes sur ces derniers, l'une de ces aiguilles étant constituée par l'extrémité avant de la flèche d'agrafage ; la branche supérieure de ces aiguilles présentant un bord penté (99, 103) favorisant le guidage desdits fils jusqu'à leur encoche (101, 104).

18. Machine de palissage selon l'une quelconque des revendications 1 à 17, caractérisée en ce qu'elle comporte un dispositif de guidage et de centrage automatique (53) de sa tête de palissage sur le rang de ceps de vigne ou l'alignement d'arbustes.

19. Machine de palissage selon la revendication 18, caractérisée en ce que lesdits moyens de guidage et de centrage (53) comprennent au moins un palpeur pivotant (54) monté à la partie inférieure d'au moins l'un des montants (18) du châssis (15) portant les organes de relevage et de guidage, ce palpeur étant destiné à s'appuyer contre les pieds de vignes ou autres souches d'arbustes alignés et agissant, par l'intermédiaire de dispositifs contacteurs (60, 61, 62) sur le vérin (9) assurant le positionnement de la tête de palissage.

20. Machine de palissage suivant l'une quelconque des revendications 15 à 17, caractérisée en ce qu'une pompe pneumatique à double effet (110) relie le bras fixe (64) portant la partie statique de l'agrafeuse et le bras mobile (69) portant la flèche mobile (71) de ladite agrafeuse, ce vérin actionnant alternativement le vérin d'introduction d'agrafe (92) et le vérin de pose d'agrafe (109).

21. Machine de palissage suivant l'une quelconque des revendications 1, 15 et 16, caractérisée en ce que le bâti (16) portant le système d'agrafage (65-68-71) est suspendu au chassis (11) portant les ensembles de relevage et de guidage (31-32-36-48-28-29), avec une aptitude de pivotement en direction de l'arrière.

22. Machine de palissage selon l'une quelconque des revendications 15 à 21, caractérisée en ce que son système d'agrafage comprend des agrafes permettant d'établir une liaison entre deux fils courant côte à côte et rapprochés par ses moyens de guidage et de rapprochement (3), ces agrafes étant exécutées dans un matériau doté d'une capacité de déformation élastique et comprenant un corps (112) présentant deux faces planes opposées et dont les extrémités sont recourbées, de manière à constituer deux crochets opposés (113) dont les ouvertures (114) se font face et comprenant, chacun, une branche (117) espacée dudit corps et s'étendant en direction du centre ou plan médian (P'-P') de l'agrafe, et en ce que le corps (112) des agrafes est rectiligne et présente des surfaces externe (115) et interne (116) planes et parallèles, tandis que les extrémités en forme de crochets desdites agrafes sont symétriques et conformées de manière identique, un obstacle (121) franchissable par déformation élastique d'au moins une partie de ces dernières étant placé à l'entrée du logement (120) ménagé à l'intérieur de chaque crochet.

23. Machine de palissage selon la revendication 22, caractérisée en ce que ledit obstacle (121) est conformé pour être aisément franchissable par un fil (F1, F2) dans le sens de la pénétration à l'intérieur du logement (120), et infranchissable dans la direction opposée.

24. Machine de palissage selon l'une des revendications 22 ou 23, caractérisée en ce que l'extrémité libre (118) des branches (117) des crochets (113) est inclinée vers l'extérieur par rapport à la portion restante desdites branches.

25. Machine de palissage selon l'une quelconque des revendications 22 à 24, caractérisée en ce que lesdits obstacles (121) sont solidaires du corps (112) desdites agrafes et sont formés par deux cliquets constitués par des languettes flexibles (121) rattachées au bord interne du corps (112) et s'étendant, chacune, respectivement, jusqu'à la branche (117) des crochets (113) ; lesdites languettes flexibles (121) ayant une position inclinée par rapport au corps (112) et s'étendent en direction de l'intérieur du logement (120) délimité par chaque crochet (113).

26. Machine de palissage suivant l'une quelconque des revendications 22 à 25, caractérisée en ce que ses agrafes sont réalisées sous forme de bandes d'agrafes comprenant une pluralité d'unités liées entre elles par l'intermédiaire des bords longitudinaux de leurs dos (115).

## Claims

1. Machine for training vines or other plants disposed in rows, by means of lifting wires placed on either side of the rows, and clip fasteners, said machine comprising two assemblies for raising and guiding the lifting wires (F) and the vegetation, disposed one each side of the plane of symmetry (P-P) of its plant training head, and each including means (32, 36, 48) for raising and guiding the lifting wires of the plant training system and the vegetation, characterised in that the means for raising and guiding the lifting wires (F) include rotating axles (32) fitted with peripheral lugs (35) enabling the lifting wires to be grasped automatically at the start of a row, and in that it also includes means (3) for guiding and drawing together the raised wires, separate from said raising means (32, 36, 48) and disposed to the rear of the latter, these means being arranged so as to draw together said wires into a position in which it is possible to bundle them together using clip fasteners, and a device (4) for linking or fastening the raised wires with clips once they have been drawn together, said device being positioned to follow said guiding means (3), and the latter device preferably being of a type that allows the placement of clip fasteners for bundling together said wires once they have been drawn together.

2. Plant training machine according to claim 1, characterised in that each axle (32) is constituted by a disk provided on its periphery with a circular groove (33) for guiding one of the lifting wires (F) of the plant training system.

3. Plant training machine according to claim 2, characterised in that the axles (32) have a generally truncated shape, and in that the lugs (35) are disposed on their peripheral edge of greater diameter.

4. Plant training machine according to any of claims 1 to 3, characterised in that the axles (32) are so mounted that their direction can be adjusted.

5. Plant training machine according to any of claims 1 to 4, characterised in that it has means (36, 48) for channelling the raised branches, said means being disposed behind the means (32) for raising the lifting wires, viewed in the machine's direction of travel.

6. Plant training machine according to claim 5, characterised in that each vegetation channelling means has at least one continuous flexible linkage (36, 48) running on driving wheels (25, 27) and driven wheels (37, 49) and the active strand of which is disposed, for at least part of its length, in front of the inner side of the raising axles (32).

7. Plant training machine according to claim 6, characterised in that each active vegetation channelling means has at least one calibrated chain (36, 48) constituted, in a per se known manner, by perpendicular links.

8. Plant training machine according to either of claims 6 or 7, characterised in that the continuous flexible linkage (36, 48) circulates in a rigid guide track (41) constituted by the inside top edge of a deflector-type casing (31) bearing the axle (32) and whose inside face converges towards the plane of symmetry (P-P) of the plant training head.

9. Plant training machine according to any of claims 6 to 8, characterised in that each vegetation channelling assembly has two continuous flexible linkages (36, 48) disposed one above the other.

10. Plant training machine according to any of claims 1 to 9, characterised in that the means or assemblies (3) for guiding the raised lifting wires comprise a rotary cylinder (26) provided on the outside with a helical groove (42) terminating in a lower circular groove (43).

11. Plant training machine according to claim 10, characterised in that the rotary guide cylinder has a shallow second helical groove (44) disposed beneath the circular groove (43).

12. Plant training machine according to any of claims 1 to 11, characterised in that each raising and guiding assembly has a serrated sleeve (28) disposed above the rotary guide cylinder (26) and of greater diameter than said cylinder and the wheels driving the continuous flexible linkages (36, 48).

13. Plant training machine according to any of claims 1 to 12, characterised in that in its upper portion each raising and guiding assembly has a height-adjustable cutting member (29).

14. Plant training machine according to any of claims 1 to 13, characterised in that the two raising and guiding assemblies (31-32-36-48-26-28-29) are swivel-mounted on a vertical shaft (22) allowing the size of the feed opening of the plant training head of said machine to be adjusted.

15. Plant training machine according to any of claims 1 to 14, characterised in that the clip attachment system comprises the following:
- a static part comprising a clip loader (76), a holding chamber (89) having a top expulsion opening (90) and configured to receive a clip, a device (78-86-87) for introducing the clips one by one into said chamber and a vertically movable pusher (91) disposed beneath said holding chamber for expelling the clip housed therein;
- a movable part or jib (71) guided by said static part and having, in proximity to its free end, a downwardly opening compartment (105) configured to receive a clip (111), an ejector (107-108-109) being installed in the upper portion of said compartment;
- means for displacing said jib in order to bring it into a position whereby its compartment (105) is located above and in correspondence with the holding chamber (89) of the static part or into a position whereby said compartment is located above the plant training wires (F), the latter raised and drawn together.

16. Plant training machine according to claim 15, characterised in that the device driving the strip of clips and housed in the loader (76) has a free wheel (78) of which the hub (78a) is rigidly joined to a swivelling lever (86) fixed on one of the ends of a tension spring (87) of which the other end is acted upon by a fixed component (88a) of the clip attachment machine, said spring causing the lever to swivel in one direction, the rocking of said lever in the opposite direction being caused by a vertical finger (95) fast with the pusher (61) of the static part of the clip attachment machine and the top end of which is disposed beneath said lever.

17. Plant training machine according to claim 14, characterised in that the clip attachment system has two needles or prongs (68, 102) which can move in a transversal plane for drawing together and holding the plant training wires when the clips are fastened thereon, one of said needles being constituted by the front end of the clip attachment jib; the upper limb of said needles having a sloping edge (99, 103) which helps to guide said wires into their notch (101, 104).

18. Plant training machine according to any of claims 1 to 17, characterised in that it has a device (53) for automatically guiding and centring its plant training head along the row of vine stocks or line of bushes.

19. Plant training machine according to claim 18, characterised in that said guiding and centring means (53) include at least one swivelling feeler (54) mounted on the lower portion of at least one of the uprights (18) of the chassis (15) bearing the raising and guiding means, said feeler being designed to rest against the bases of the aligned vine stocks or other bushes and acting, by the agency of contact devices (60, 61, 62) on the jack (9) positioning the plant training head.

20. Plant training machine according to any of claims 15 to 17, characterised in that a double-acting pneumatic pump (110) connects the fixed arm (64) bearing the static part of the clip attachment machine and the movable arm (69) bearing the movable jib (71) of said clip attachment machine, said jack alternately actuating the clip insertion jack (92) and the clip placement jack (109).

21. Plant training machine according to any of claims 1, 15 and 16, characterised in that the frame (16) bearing the clip attachment system (65-68-71) is suspended from the chassis (11) bearing the raising and guiding assemblies (31-32-36-48-28-29), and is able to swivel rearwards.

22. Plant training machine according to any of claims 15 to 21, characterised in that its clip attachment system includes clip fasteners enabling a link to be established between two wires running side by side and drawn together by said means (3) for guiding and drawing together, said clip fasteners being made from a material capable of elastic deformation and comprising a body (112) having two opposing plane faces and the ends thereof being bent back to constitute two opposed hooks (113) of which the openings (114) face one another, and each having a limb (117) spaced apart from said body and extending in the direction of the centre or median plane (P'-P') of the clip, and in that the body (112) of the clip fasteners is rectilinear and has plane and parallel external (115) and internal (116) surfaces, whilst the hook-shaped ends of said clip fasteners are symmetrical and identically configured, an obstacle (121) surmountable by elastic deformation of at least part of said clip fasteners being placed at the entrance to the compartment (120) set in the interior of each hook.

23. Plant training machine according to claim 22, characterised in that said obstacle (121) is configured to be readily passable by a wire (F1, F2) in the direction of penetration to the inside of the compartment (120), and impassable in the opposite direction.

24. Plant training machine according to either of claims 22 or 23, characterised in that the free end (118) of the limbs (117) of the hooks (113) is inclined outwards with respect to the remaining portion of said limbs.

25. Plant training machine according to any of claims 22 to 24, characterised in that said obstacles (121) are fast with the body (112) of said clip fasteners and are formed by two catches constituted by flexible tongues (121) attached to the inside edge of the body (112) and each extending, respectively, up to the limb (117) of said hooks (113); said flexible tongues (121) having an inclined attitude with respect to the body (112) and extending in the direction of the interior of the compartment (120) delimited by each hook (113).

26. Plant training machine according to any of claims 22 to 25, characterised in that the clip fasteners thereof are constructed in the form of strips of clips comprising a plurality of units interconnected by the longitudinal edges of their backs (115).

## Patentansprüche

1. Anpfählmaschine für Weinstöcke oder andere Pflanzen, die mittels beiderseits von Reihen positionierter Aufbindedrähte und Klammern in Reihen angeordnet sind, wobei die Maschine zwei Einrichtungen zum Hochbinden und Führen der Aufbindedrähte (F) und des Pflanzenwuchses umfaßt, die zu beiden Seiten der Symmetrieebene (P-P) ihres Anpfählkopfes angeordnet sind und jeweils Mittel (32, 36, 48) zum Hochziehen und Fuhren der Anpfähl-Aufbindedrähte und des Pflanzenwuchses umfassen, dadurch gekennzeichnet, daß die Mittel zum Hochziehen und Führen der Aufbindedrähte (F) Doppelkegeldrehrollen (32) umfassen, die an ihrem Umfang mit Haken (35) ausgestattet sind, welche ein automatisches Erfassen der Aufbindedrähte am Anfang der Reihe ermöglichen, und daß die Maschine ebenfalls Führungs- und Annäherungsorgane (3) für die aufgebundenen Drähte umfaßt, die sich von den Mitteln zum Hochziehen (32, 36, 48) unterscheiden und hinter diesen angeordnet sind, wobei diese Organe so gestaltet sind, daß sie die Drähte in eine Position zusammenführen, die deren Verbindung mit Hilfe von Klammern ermöglicht, sowie eine nach den Führungsorganen (3) angeordnete Verbindungs- oder Klammereinrichtung (4) für die aufgebundenen und angenäherten Drähte, wobei diese Einrichtung bevorzugt so gestaltet ist, daß das Anbringen der Verbindungsklammern an die Drähte in angenäherter Position ermöglicht wird.

2. Anpfählmaschine nach Anspruch 1, dadurch gekennzeichnet, daß jede Doppelkegelrolle (32) von einer Scheibe gebildet wird, die an ihrem Außenrand mit einer kreisförmigen Auskehlung (33) zum Führen eines der Aufbindedrähte (F) des Spaliers versehen ist.

3. Anpfählmaschine nach Anspruch 2, dadurch gekennzeichnet, daß die Doppelkegelrollen (32) eine allgemein kegelstumpfartige Form aufweisen und daß die Haken (35) am Umfangsrand mit dem größten Durchmesser angeordnet sind.

4. Anpfählmaschine nach einem der Ansprüche 1 bis 3, dadurch gekennzeichnet, daß die Doppelkegelrollen (32) mit verstellbarer Ausrichtung montiert sind.

5. Anpfählmaschine nach einem der Ansprüche 1 bis 4, dadurch gekennzeichnet, daß sie Mittel zur Richtungsgebung (36, 48) der aufgebundenen Äste oder Zweige umfaßt, wobei diese Mittel bezüglich der Fortbewegungsrichtung der Maschine hinter den Mitteln zum Hochziehen (32) der Aufbindedrähte angeordnet sind.

6. Anpfählmaschine nach Anspruch 5, dadurch gekennzeichnet, daß jedes Mittel zur Richtungsgebung des Pflanzenwuchses mindestens ein nachgiebiges Endlosverbindungselement (36, 48) umfaßt, das sich um Antriebsräder (25, 27) und getriebene Räder (37, 49) schlingt, und dessen Wirkstück auf mindestens einem Teil seiner Länge vor der Innenseite der Doppelkegelrollen (32) zum Hochziehen angeordnet ist.

7. Anpfählmaschine nach Anspruch 8, dadurch gekennzeichnet, daß jedes aktive Mittel zur Richtungsgebung des Pflanzenwuchses mindestens eine kalibrierte Kette (36, 48) umfaßt, die nach an sich bekannter Art aus zueinander senkrechtstehenden Kettengliedern gebildet wird.

8. Anpfählmaschine nach einem der Ansprüche 6 oder 7, dadurch gekennzeichnet, daß der Umlauf des nachgiebigen Endlosverbindungselements (36, 48) in einem starren Führungsweg (41) erfolgt, der von dem oberen Innenrand eines Ablenkgehäuses (31) gebildet wird, das die Doppelkegelrolle (32) trägt und dessen Innenseite eine in Richtung auf die Symmetrieebene (P-P) des Anpfählkopfes zusammenlaufende Neigung aufweist.

9. Anpfählmaschine nach einem der Ansprüche 6 bis 8, dadurch gekennzeichnet, daß jede Einrichtung zur Richtungsgebung des Pflanzenwuchses zwei nachgiebige Endlosverbindungselemente (36, 48) umfaßt, die übereinander angeordnet sind.

10. Anpfählmaschine nach einem der Ansprüche 1 bis 9, dadurch gekennzeichnet, daß die Mittel oder Einrichtungen zur Führung der aufgebundenen Aufbindedrähte (3) eine Walze (26) umfassen, die außen mit einer in Schraubenlinie verlaufenden Auskehlung (42) versehen ist, die in eine innere kreisförmige Auskehlung (43) mündet.

11. Anpfählmaschine nach Anspruch 10, dadurch gekennzeichnet, daß die Führungswalze mit einer zweiten in Schraubenlinie verlaufenden Auskehlung mit geringer Höhe (44) versehen ist, die unter der kreisförmigen Auskehlung (43) angeordnet ist.

12. Anpfählmaschine nach einem der Ansprüche 1 bis 11, dadurch gekennzeichnet, daß jede Einrichtung zum Hochziehen und Führen eine gerippte Muffe (28) aufweist, die über der Führungswalze (26) angeordnet ist und deren Umfang größer ist als derjenige der Walze und derjenige der Räder, die für den Antrieb der nachgiebigen Endlosverbindungselemente (36, 48) sorgen.

13. Anpfählmaschine nach einem der Ansprüche 1 bis 12, dadurch gekennzeichnet, daß jede Einrichtung zum Hochziehen und Führen in ihrem oberen Teil ein höhenverstellbares Schneideorgan (29) aufweist.

14. Anpfählmaschine nach einem der Ansprüche 1 bis 13, dadurch gekennzeichnet, daß die beiden Einrichtungen zum Hochziehen und Führen (31-32-36-48-26-28-29) um eine vertikale Achse (22) schwenkbar montiert sind, wodurch die Einstellung der Breite der Eintrittsöffnung des Anpfählkopfes der Maschine ermöglicht wird.

15. Anpfählmaschine nach einem der Ansprüche 1 bis 14, dadurch gekennzeichnet, daß das Klammersystem folgendes umfaßt:
- einen feststehenden Teil mit einer Hakenladeeinrichtung (76), eine Bereitschaftskammer (89) mit einer oberen Ausstoßöffnung (90) und einer zur Aufnahme der Klammer geeigneten Form, eine Einrichtung (78-86-87) zum Einführen von jeweils einer Klammer in diese Kammer und eine in vertikaler Richtung bewegliche Druckeinrichtung (91), die über der Kammer angeordnet ist und zum Ausstoß der in der Kammer befindlichen Klammer dient;
- einen vom feststehenden Teil geführten beweglichen Teil bzw. einen Pfeil (71), der direkt neben seinem freien Ende eine Aufnahme (105) aufweist, die sich nach unten öffnet und eine zur Aufnahme einer Klammer (111) geeignete Form aufweist, wobei eine Ausstoßvorrichtung (107-108-109) im oberen Teil der Aufnahme montiert ist;
- Mittel zum Sicherstellen der Verschiebung des Pfeils, um diesen in eine Position zu versetzen, in der sich seine Aufnahme (105) oberhalb und in Verbindung mit der Bereitschaftskammer (89) des feststehenden Teils befindet oder in einer Position, in der sich die Aufnahme oberhalb der aufgebundenen und angenäherten Spalierdrähte befindet.

16. Anpfählmaschine nach Anspruch 15, dadurch gekennzeichnet, daß die Antriebseinrichtung für das Klammerband, die sich in der Ladeeinrichtung (76) befindet, ein freies Rad (78) umfaßt, dessen Nabe (78a) fest in einem Stück mit einem Schwenkhebel (86) verbunden ist, der an einem der Enden einer Zugfeder (87) befestigt ist, deren anderes Ende an einem feststehenden Teil (88a) des Klammergeräts befestigt ist, wobei diese Feder das Verschwenken des Hebels in eine Richtung sicherstellt; wobei das Verschwenken des Hebels in die entgegengesetzte Richtung durch einen vertikalen Finger (95) sichergestellt ist, der mit der Druckeinrichtung (61) des feststehenden Teils des Klammergeräts in einem Stück verbunden ist und dessen oberes äußeres Ende unterhalb des Hebels angeordnet ist.

17. Anpfählmaschine nach Anspruch 14, dadurch gekennzeichnet, daß das Klammersystem zwei Nadeln oder Gabeln (68, 102) umfaßt, die zur Annäherung der Spalierdrähte und Beibehaltung der angenäherten Position während des Anbringens der Klammern an den Drähten in transversaler Ebene beweglich sind, wobei eine dieser Nadeln aus dem vorderen Ende des Klammerpfeils gebildet wird; wobei der obere Abschnitt dieser Nadeln einen geneigten Rand (99, 103) bildet, wodurch die Führung der Drähte bis in die vorgesehene Aussparung (101, 104) begünstigt wird.

18. Anpfählmaschine nach einem der Ansprüche 1 bis 17, dadurch gekennzeichnet, daß sie eine Einrichtung zum Führen und automatischen Zentrieren (53) des Anpfählkopfes über der Reihe der Weinstöcke oder den Strauchreihen umfaßt.

19. Anpfählmaschine nach Anspruch 18, dadurch gekennzeichnet, daß die Mittel zur Führung und Zentrierung (53) mindestens einen schwenkbaren Fühlstift (54) umfassen, der am unteren Teil mindestens eines der Ständer (18) des Chassis (15) montiert ist, das die Organe zum Hochziehen und Führen trägt, wobei der Fühlstift dazu bestimmt ist, sich gegen die in einer Reihe befindlichen Rebstockwurzeln oder andere Wurzelstöcke abzustützen und mittels Kontakteinrichtungen (60, 61, 62) auf den Zylinder (9) zu wirken und damit die Positionierung des Anpfählkopfes zu gewährleisten.

20. Anpfählmaschine nach einem der Ansprüche 15 bis 17, dadurch gekennzeichnet, daß eine doppelt wirkende Druckluftpumpe (110) den starren Arm (64) mit dem statischen Teil des Klammergeräts und den beweglichen Arm (69) mit dem beweglichen Pfeil (71) des Klammergeräts verbindet, wobei der Zylinder abwechselnd den Zylinder zum Einführen der Klammer (92) und den Zylinder zum Anbringen der Klammer (109) betätigt.

21. Anpfählmaschine nach einem der Ansprüche 1, 15 und 16, dadurch gekennzeichnet, daß der Rahmen 16, der das Klammersystem (65-68-71) trägt, am Chassis (11) aufgehängt ist, das die Einrichtungen zum Hochziehen und Führen (31-32-36-48-28-29) trägt, und in rückwärtige Richtung geschwenkt werden kann.

22. Anpfählmaschine nach einem der Ansprüche 15 bis 21, dadurch gekennzeichnet, daß das Klammersystem mit Klammern ausgestattet ist, welche die Herstellung einer Verbindung zwischen zwei Drähten ermöglichen, die nebeneinender herlaufen und mit Hilfe der Mittel zur Führung und Annäherung (3) aneinander angenähert sind, wobei die Klammern aus einem Material hergestellt sind, das eine elastische Verformbarkeit aufweist, und wobei sie einen Körper (112) umfassen, der zwei einander gegenüberliegende flache Seiten aufweist und dessen Enden so gekrümmt sind, daß sie zwei einander gegenüberliegende Haken (113) bilden, deren Öffnungen (114) einander gegenüberliegen und jeweils einen vom Körper beabstandeten Abschnitt (117) aufweisen und sich in Richtung der Mitte oder mittleren Ebene (P'-P') der Klammer erstrecken, und daß der Körper (112) der Klammern geradlinig ist und flache und parallele äußere (115) und innere (116) Oberflächen aufweist, während die hakenförmigen Enden der Klammern symmetrisch und identisch gestaltet sind, wobei ein durch elastische Verformung von zumindest einem Teil dieser Enden überwindbares Hindernis (121) am Eingang zu der im Innenteil jedes Hakens vorgesehenen Aufnahme (120) positioniert ist.

23. Anpfählmaschine nach Anspruch 22, dadurch gekennzeichnet, daß das Hindernis (121) so gestaltet ist, daß es leicht von einem Draht (F1, F2) in Richtung des Vordringens in den Innenteil der Aufnahme (120) überwunden werden kann und ein Überwinden in entgegengesetzter Richtung nicht möglich ist.

24. Anpfählmaschine nach einem der Ansprüche 22 oder 23, dadurch gekennzeichnet, daß das freie Ende (118) der Abschnitte (117) der Haken (113) in bezug auf den restlichen Teil der Abschnitte nach außen geneigt ist.

25. Anpfählmaschine nach einem der Ansprüche 22 bis 24, dadurch gekennzeichnet, daß diese Hindernisse (121) mit dem Körper (112) der Klammern in einem Stück verbunden sind und von zwei einschnappenden Rückhalteinrichtungen gebildet werden, die aus biegsamen Federzungen (121) bestehen, die am Innenrand des Körper (112) befestigt sind und sich jeweils entsprechend bis zum Abschnitt (117) der Haken (113) erstrecken; wobei diese biegsamen Federzungen (121) in bezug auf den Körper (112) eine geneigte Position aufweisen und sich in Richtung des Innenteils der Aufnahme (120) erstrecken, der jeweils durch die Haken (113) begrenzt wird.

26. Anpfählmaschine nach einem der Ansprüche 22 bis 25, dadurch gekennzeichnet, daß diese Klammern in Form von Klammerbändern ausgeführt sind und mehrere, mittels der Längsrückenflächen miteinander verbundene Einheiten umfassen.
